# EUROPÄISCHE PATENTSCHRIFT

(11) **EP 3 244 749 B1**
(45) Veröffentlichungstag und Bekanntmachung des Hinweises auf die Patenterteilung: **11.10.2023**
(21) Anmeldenummer: 16700707.9
(22) Anmeldetag: 13.01.2016
(51) Int. Cl.: A23G 3/34, A23G 3/02, A23G 3/36, A23G 3/42, A23G 3/44, A23G 3/50

(54) **WEICHBONBONHERSTELLUNG MITTELS ADDITIVEM VERFAHREN MIT EINER DÜSE**
PRODUCTION OF SOFT CONFECTIONERY BY MEANS OF ADDITIVE PROCESS WITH A NOZZLE
PRODUCTION D'UN BONBON MOU PAR UN PROCÉDÉ ADDITIF À L'AIDE D'UN GICLEUR

(30) Priorität: 13.01.2015 DE 102015000088; 21.08.2015 DE 102015010791; 24.08.2015 DE 102015010823
(43) Veröffentlichungstag der Anmeldung: 22.11.2017
(73) Patentinhaber: Rem3dy Health Limited, Birmingham, West Midlands B5 5SL (GB)
(72) Erfinder: AYDIN, Bülent, 46399 Bocholt (DE); FASSIN, Bastian, 46446 Emmerich (DE); OSSENBRINK, Dirk, 47533 Kleve (DE)
(74) Vertreter: Latham, Stuart Alexander
(86) Internationale Anmeldenummer: PCT/EP2016/050585
(87) Internationale Veröffentlichungsnummer: WO 2016/113318

(56) Entgegenhaltungen:
- DE-U1-202014 001 005
- US-A1- 2007 231 427
- US-A1- 2012 321 750

## Beschreibung

Die Erfindung bezieht sich auf ein Verfahren zum Herstellen eines Weichbonbons. Die Erfindung betrifft ferner eine Vorrichtung beinhaltend eine Weichbonbonvorläufermasse; ein Verfahren zum Herstellen eines Weichbonbons mit der Vorrichtung; eine Verwendung der Vorrichtung; sowie eine Verwendung einer Weichbonbonvorläufermasse.

Süßwaren, insbesondere Weichbonbons, sind ein weit verbreitetes und gemeinhin beliebtes Genussmittel. Eine grundsätzlich im Stand der Technik bekannte Art Weichbonbons herzustellen beinhaltet ein Gießen einer flüssigen Vorläufermasse in eine Negativform. Weichbonbons sind zum Beispiel Fruchtgummibonbons, Weingummis, Toffees und Kaubonbons.

Zum Herstellen von Fruchtgummibonbons ist im Stand der Technik auch ein Gießen der Fruchtgummibonbonmasse in eine Negativform, welche aus einem Maisstärkepuder gebildet ist, bekannt. Dabei wurde die Negativform durch einen Stempel als Positivform in das Maisstärkepuder hineingedrückt. Das Maisstärkepuder befindet sich dazu in einem Puderkasten. Zum Entformen der Fruchtgummibonbons wird der Puderkasten gewendet. Bei diesem Verfahren des Stands der Technik ergeben sich folgende Nachteile. Die durch den Stempel geprägte Negativform ist nicht formstabil. Sie kann insbesondere in dem Zeitraum zwischen dem Prägen der Negativform und dem Gießen der Fruchtgummibonbonmasse verändert oder zerstört oder beides werden. Zudem kann das Entformen misslingen. Eine Formenvielfalt der mit dem vorgehend beschrieben Gießverfahren herstellbaren Weichbonbons ist beschränkt. Insbesondere beinhalten die nach diesem Verfahren hergestellten Weichbonbons immer eine Grundfläche, welche nach dem Gießen in die Form freiliegende Oberfläche der Vorläufermasse ist. Häufig wird versucht die Form eines Weichbonbons einem realen Objekt wie einer Frucht oder einem Tier nachzuempfinden. Dies gelingt bedingt durch das Herstellungsverfahren der Weichbonbons oft nur unzureichend. Häufig werden eher reliefartige Projektionen des realen Objekts erhalten. Ferner kann in dem herkömmlichen Herstellungsverfahren ein Anteil des die Negativform bildenden Maisstärkepuders an der Süßware haften bleiben. Ist dieser Anteil zu groß, kann sich dies optisch oder geschmacklich oder beides zu stark auf das Fruchtgummibonbon auswirken. Aus DE-AS-1 218 861 ist weiterhin ein Verfahren bekannt, in dem ein Strang erzeugt wird, der dann in die einzelnen Bonbons zerschnitten wird. Damit erfolgt die Formgebung durch Schneiden.

DE 20 2014 001005 U1 zeigt einen Extruder für Zucker zum Einsatz in 3D-Druckern mit einem Rohr in dem sich eine Förderschnecke, die durch einen Gleichstrommotor angetrieben wird, befindet. Die Förderschnecke Zucker der durch eine Öffnung einfließt in Richtung einer beheizten Düse fördert, wodurch der Zucker flüssig wird und aus der Düse gedrückt schichtweise auf einem Untergrund aufgebracht werden kann.

US 2007/231427 A1 stellt Vorrichtungen, Verfahren und Produkte bereit, die auf Süßwarenprodukte gerichtet sind, die eine geschmolzene Gummibasenzusammensetzung enthalten. Eine Abgabevorrichtung sprüht Teilchen einer geschmolzenen Gummibasenzusammensetzung auf ein essbares Substrat. Die geschmolzene Gummibasenzusammensetzung verfestigt sich, um die geschmolzene Gummibasenzusammensetzung zu bilden. Die geschmolzene Gummibasenzusammensetzung kann eine oder mehrere organoleptische Komponenten enthalten und kann in Schichtform, in Form eines Objekts oder in Form eines dreidimensionalen Objekts vorliegen.

US 2012/321750 A1 beschreibt neuartige Verfahren zur Herstellung eines komplexen Konfekts, umfassend ein erstes Konfekt, das eine essbare hohle Hülle aufweist, und ein separat gebildetes zweites Konfekt, das ebenfalls essbar ist und innerhalb des ersten Konfekts ruht.

Allgemein ist es eine Aufgabe der vorliegenden Erfindung, einen Nachteil, der sich aus dem Stand der Technik ergibt, zumindest teilweise zu überwinden. Eine Aufgabe der Erfindung ist es, ein Weichbonbon mit einer größeren Formenvielfalt bereitzustellen. Eine Aufgabe der Erfindung ist es, ein Verfahren zum Herstellen eines Weichbonbons ohne Negativform bereitzustellen.

Eine weitere erfindungsgemäße Aufgabe liegt darin, Fruchtgummis bzw. Weichbonbons und Vorläufermassen sowie ein Verfahren zur Herstellung dieser Fruchtgummis bzw. Weichbonbons bereitzustellen, wobei die Weichbonbons bzw. Fruchtgummis möglichst zum unmittelbar en Verzehr hergestellt werden können.

Eine andere erfindungsgemäße Aufgabe liegt darin, Fruchtgummis bzw. Weichbonbons und Vorläufermassen sowie ein Verfahren zur Herstellung dieser Fruchtgummis bzw. Weichbonbons bereitzustellen, wobei die Weichbonbons bzw. Fruchtgummis möglichst dezentral an dem Ort ihres Verbrauchs hergestellt werden können.

Eine weitere erfindungsgemäße Aufgabe liegt darin, Fruchtgummis bzw. Weichbonbons und Vorläufermassen sowie ein Verfahren zur Herstellung dieser Fruchtgummis bzw. Weichbonbons bereitzustellen, wobei die Weichbonbons bzw. Fruchtgummis möglichst ohne diese vor dem Verzehr verpacken oder wachsen zu müssen hergestellt werden können. Weiterhin besteht eine Aufgabe darin, Massen, eine Vorrichtung und ein Verfahren anzugeben, das die Herstellung von Weichbonbons bzw. Fruchtgummis ohne lange Trocken- bzw. Abkühlzeiten und den bei einer industriellen Fertigung damit verbundenen hohen Aufwand an Apparaten und Energie erlaubt.

Die oben genannten Aufgaben werden gelöst durch das Verfahren gemäß Patentanspruch 1 und der Vorrichtung gemäß Patentanspruch 10 und Gegenstände der unabhängigen Patentansprüche. Ausgestaltungen ergeben sich aus den abhängigen Patentansprüchen und den Figuren.

Ein Beitrag zur mindestens teilweisen Erfüllung mindestens einer dieser Aufgaben wird durch die unabhängigen Ansprüche geleistet. Die abhängigen Ansprüche stellen bevorzugte Ausführungsformen bereit, die zur mindestens teilweisen Erfüllung mindestens einer der Aufgaben beitragen.

Einen Beitrag zum mindestens teilweisen Erfüllen einer der erfindungsgemäßen Aufgaben leistet eine Ausführungsform 1 eines Verfahrens 1 zum Herstellen eines Weichbonbons, wobei das Verfahren als Verfahrensschritte beinhaltet
a) Bereitstellen einer Weichbonbonvorläufermasse, gekennzeichnet durch einen Wassergehalt in einem Bereich von 17 bis 22 Gew.-%, bezogen auf die Weichbonbonvorläufermasse; und
b) Formen der Weichbonbonvorläufermasse mittels einer eine Austrittsöffnung (902) aufweisenden Düse durch Überlagern eines Substrats mit der Weichbonbonvorläufermasse unter Erhalten eines Formkörpers,
wobei die Austrittsöffnung der Düse eine dreidimensionale Trajektorie abfährt.

Eine erfindungsgemäße Ausführungsform 2 des Verfahrens 1 ist nach der Ausführungsform 1 ausgebildet, wobei das Verfahren weiter ein Härten des Formkörpers unter Erhalten eines Weichbonbons beinhaltet. Ein bevorzugtes Härten ist ein Trocknen.

Eine erfindungsgemäße Ausführungsform 3 des Verfahrens 1 ist nach der Ausführungsform 1 oder 2 ausgebildet, wobei das Bereitstellen der Weichbonbonvorläufermasse in Verfahrensschritt a) die Unterschritte:
i) Bereitstellen einer Basismasse; und
ii) Kontaktieren der Basismasse mit einer Säure unter Erhalten der Weichbonbonvorläufermasse
beinhaltet.

Eine erfindungsgemäße Ausführungsform 4 des Verfahrens 1 ist nach der Ausführungsform 1, 2 oder 3 ausgebildet, wobei das Bereitstellen der Weichbonbonvorläufermasse in Verfahrensschritt a) die Unterschritte:
A) Bereitstellen einer Grundmasse;
B) Bereitstellen einer Säuremasse; und
C) Kontaktieren der Grundmasse mit einer Säuremasse unter Erhalten der Weichbonbonvorläufermasse beinhaltet;
wobei die Grundmasse und die Säuremasse in einem Gewichtsverhältnis von 1:2 bis 2:1, vorzugsweise in einem Gewichtsverhältnis in einem Bereich von 1:1,5 bis 1,5:1 und besonders bevorzugt in einem Gewichtsverhältnis in einem Bereich von 1:1,1 bis 1,1:1 kontaktiert werden.

Es ist im Rahmen einer Ausgestaltung dieser Ausführungsform bevorzugt, dass das Kontaktieren bei einer Temperatur unter 110°C erfolgt. Bevorzugt erfolgt das Kontaktieren in einem Temperaturbereich von 15 bis 70°C und besonders bevorzugt in einem Temperaturbereich von 25 bis 55°C sowie weiterhin bevorzugt in einem Temperaturbereich von 35 bis 45°C. Ferner ist es erfindungsgemäß bevorzugt, dass zwischen Beginn des Kontaktierens gemäß Unterschritt A) und dem Abschluss Verfahrensschritts b) mit dem Vorliegen der Weichbonbonvorläufermasse ein Zeitraum von weniger als 240 sec., vorzugsweise von weniger als 120 sec., ferner bevorzugt von weniger als 60 sec., zudem bevorzugt weniger als 30 sec. und besonders bevorzugt weniger als 10 sec. liegt.

Eine erfindungsgemäße Ausführungsform 5 des Verfahrens 1 nach der Ausführungsform 4 ausgebildet, wobei die Grundmasse einen Polyzucker beinhaltet, wobei der Gehalt an Polyzucker der Grundmasse mindestens 10 Gew.-%, vorzugsweise mindestens 20 Gew.-% und besonders bevorzugt mindestens 90 Gew.-% über dem Gehalt an Polyzucker in der Säuremasse liegt. In einer Ausgestaltung dieser Ausführungsform ist die Säuremasse Polyzucker-frei. Das Vorstehende gilt als gesonderte Ausgestaltung dieser Ausführungsform für jeden einzelnen nachfolgend genannten Polyzucker.

Eine erfindungsgemäße Ausführungsform 6 des Verfahrens nach der Ausführungsform 4 oder 5 ausgebildet, wobei die Säuremasse eine Säure beinhaltet, wobei der Gehalt an Säure der Säuremasse mindestens 10 Gew.-%, vorzugsweise mindestens 50 Gew.% und besonders bevorzugt mindestens 90 Gew.-% über dem Gehalt an Säure der Grundmasse liegt. In einer Ausgestaltung dieser Ausführungsform ist die Grundmasse Säure-frei. Das Vorstehende gilt als gesonderte Ausgestaltung dieser Ausführungsform für jede einzelne nachfolgend genannte Säure.

Eine erfindungsgemäße Ausführungsform 7 des Verfahrens 1 ist Verfahrens nach einer der Ausführungsformen 4, 5 oder 6 ausgebildet, wobei die Grundmasse eine Grundmassenviskosität und die Säuremasse eine Säuremassenviskosität hat, wobei Grundmasseviskosität in einem Bereich von 50 bis 150 %, vorzugsweise in einem Bereich von 75 bis 125 % und besonders bevorzugt in einem Bereich von 90 bis 110 %, der Säuremassenviskosität liegt. Die Viskosität wird vorzugsweise bei einer Temperatur von 40°C gemessen.

Eine erfindungsgemäße Ausführungsform 8 des Verfahrens 1 ist nach der Ausführungsform 3 oder 4 ausgebildet, wobei das Kontaktieren in dem Unterschritt ii) bzw. in Unterschritt C) maximal 10 Minuten, bevorzugt maximal 8 Minuten, bevorzugter maximal 5 Minuten, jeweils vor Verfahrensschritt b) erfolgt.

Eine erfindungsgemäße Ausführungsform 9 des Verfahrens 1 ist nach der Ausführungsform 3 oder 4 ausgebildet, wobei die Säure eine organische Säure ist.

Eine erfindungsgemäße Ausführungsform 10 des Verfahrens 1 ist nach einer der vorhergehenden Ausführungsformen ausgebildet, wobei in Verfahrensschritt a) die Weichbonbonvorläufermasse einen Polyzucker in einem Bereich von 1,2 bis 2,5 Gew.-%, bevorzugt von 1,5 bis 2,3 Gew.-%, bevorzugter von 1,8 bis 2,1 Gew.-%, jeweils bezogen auf das Gewicht der Weichbonbonvorläufermasse beinhaltet. Bevorzugt beinhaltet die Basismasse denselben Polyzucker wie die Weichbonbonvorläufermasse.

Eine erfindungsgemäße Ausführungsform 11 des Verfahrens 1 ist nach einer der vorhergehenden Ausführungsformen ausgebildet, wobei in Verfahrensschritt a) die Weichbonbonvorläufermasse ein Polypeptid in einem Bereich von 1 bis 10 Gew.-%, bevorzugt von 2 bis 8 Gew.-%, bevorzugter von 3 bis 7 Gew.-%, am bevorzugtesten von 3 bis 6 Gew.-%, jeweils bezogen auf das Gewicht der Weichbonbonvorläufermasse beinhaltet.

Eine erfindungsgemäße Ausführungsform 12 des Verfahrens 1 ist nach einer der vorhergehenden Ausführungsformen ausgebildet, wobei die Weichbonbonvorläufermasse gekennzeichnet ist durch einen pH-Wert in einem Bereich von 3,0 bis 4,5, bevorzugt von 3,2 bis 4,2, bevorzugter von 3,3 bis 4,0, weiterhin bevorzugt von 3,4 bis 3,9 und ferner bevorzugt von 3,5 bis 3,7.

Eine erfindungsgemäße Ausführungsform 13 des Verfahrens 1 ist nach einer der vorhergehenden Ausführungsformen ausgebildet, wobei die Weichbonbonvorläufermasse in Verfahrensschritt b) gekennzeichnet ist durch eine Temperatur in einem Bereich von 45 bis 95°C, bevorzugt von 50 bis 90°C, bevorzugter von 55 bis 80°C, bevorzugter von 55 bis 75°C, bevorzugter von 55 bis 70°C, am bevorzugtesten von 60 bis 66°C.

Eine erfindungsgemäße Ausführungsform 14 des Verfahrens 1 ist nach einer der vorhergehenden Ausführungsformen ausgebildet, wobei die Austrittsöffnung eine Öffnungsfläche in einem Bereich von 0,1 bis 3 mm², bevorzugt von 0,3 bis 3 mm², bevorzugter von 0,4 bis 1,7 mm², bevorzugter von 0,5 bis 1,2 mm², hat.

Eine erfindungsgemäße Ausführungsform 15 des Verfahrens 1 ist nach einer der vorhergehenden Ausführungsformen ausgebildet, wobei die Weichbonbonvorläufermasse während des Abfahrens der dreidimensionalen Trajektorie portionsweise in mindestens zwei Portionen, bevorzugt in mindestens 3 Portionen, bevorzugter in mindestens 4 Portionen, bevorzugter in mindestens 5 Portionen, am bevorzugtesten in mindestens 10 Portionen, aus der Austrittsöffnung abgegeben wird. Bevorzugt erfolgt zeitlich zwischen dem Abgeben von jeweils zwei Portionen der Weichbonbonvorläufermasse aus der Austrittsöffnung eine Bewegung der Austrittsöffnung entlang der dreidimensionalen Trajektorie.

Eine erfindungsgemäße Ausführungsform 16 des Verfahrens 1 ist nach einer der vorhergehenden Ausführungsformen ausgebildet, wobei entlang der dreidimensionalen Trajektorie ein Abstand zwischen dem Substrat und der Austrittsöffnung monoton mehr wird. Der Abstand wird monoton mehr, wenn er in jedem Schritt entlang der Trajektorie mehr wird oder konstant bleibt, und insgesamt in allen Schritten entlang der Trajektorie mehr wird.

Eine erfindungsgemäße Ausführungsform 17 des Verfahrens 1 ist nach einer der Ausführungsformen 2 bis 16 ausgebildet, wobei das Härten der Weichbonbonvorläufermasse ein Temperieren der Weichbonbonvorläufermasse für eine Dauer in einem Bereich von 0,1 bis 120 Minuten, bevorzugt von 1 bis 60 Minuten, bevorzugter von 5 bis 30 Minuten auf eine Temperatur in einem Bereich von 10 bis 40°C, bevorzugt von 20 bis 35°C, bevorzugter von 25 bis 30°C, beinhaltet. Hierbei stellt jede Kombination der vorgenannten bevorzugten Bereiche der Dauer sowie der Temperatur jeweils eine bevorzugte Ausgestaltung des Verfahrens dar.

Eine erfindungsgemäße Ausführungsform 18 des Verfahrens 1 ist nach einer der vorhergehenden Ausführungsformen ausgebildet, wobei in Verfahrensschritt b) das Abfahren durch die Austrittsöffnung durch einen Aktor oder einen Motor oder durch beides angetrieben wird. Ein bevorzugter Motor ist ein Schrittmotor.

Eine erfindungsgemäße Ausführungsform 19 des Verfahrens 1 nach einer der vorhergehenden Ausführungsformen ausgebildet, wobei in Verfahrensschritt b) das Abfahren durch die Austrittsöffnung, oder ein Abgeben der Weichbonbonvorläufermasse aus der Austrittsöffnung, oder beides computergesteuert erfolgt.

Eine erfindungsgemäße Ausführungsform 20 des Verfahrens 1 ist nach der Ausführungsform 19 ausgebildet, wobei das computergesteuerte Abfahren durch die Austrittsöffnung, oder das computergesteuerte Abgeben der Weichbonbonvorläufermasse aus der Austrittsöffnung, oder beides gemäß elektronisch gespeicherten Daten über ein Weichbonbon erfolgt.

Eine erfindungsgemäße Ausführungsform 21 des Verfahrens 1 ist nach der Ausführungsform 20 ausgebildet, wobei die elektronisch gespeicherten Daten ein Modell des Weichbonbons beinhalten. Ein bevorzugtes Modell ist ein Computermodell.

Eine erfindungsgemäße Ausführungsform 22 des Verfahrens 1 ist nach der Ausführungsform 21 ausgebildet, wobei das Modell ein CAD-Modell ist.

Es wird auch offengelegt ein Weichbonbon 1, wobei das Weichbonbon erhältlich ist durch das Verfahren 1 nach einer der Ausführungsformen 1 bis 22.

Es wird auch offengelegt ein Weichbonbon 2, wobei das Weichbonbon eine Wandung beinhaltet, wobei die Wandung gekennzeichnet ist durch eine Wanddicke in einem Bereich von 0,5 bis 4 mm, bevorzugt von 0,5 bis 3 mm, bevorzugter von 0,5 bis 2 mm.

Das Weichbonbon 2 ist nach der Ausführungsform 1 ausgebildet, wobei die Wandung einen Innenraum mindestens teilweise umgibt.

Das Weichbonbon 2 ist nach der Ausführungsform 2 ausgebildet, wobei der Innenraum gekennzeichnet ist durch ein Volumen von mindestens 0,5 cm³, bevorzugt von mindestens 1 cm³, bevorzugter von mindestens 3 cm³.

Das Weichbonbon 2 ist nach der Ausführungsform 2 oder 3 ausgebildet, wobei der Innenraum eine Stützstruktur beinhaltet. Eine bevorzugte Stützstruktur ist ausgebildet zum Stützen der Wandung des Weichbonbons. Die Stützstruktur ist ausgebildet zum Stabilisieren einer Form des Weichbonbons. Hierzu kann die Stützstruktur Stützstreben beinhalten. Eine bevorzugte Stützstruktur besteht aus einem Material aus dem auch mindestens ein Teil des übrigen Weichbonbons besteht.

Das Weichbonbon 2 ist nach einer der Ausführungsformen 1 bis 4 ausgebildet, wobei die Wandung mindestens eine, bevorzugt mindestens 2, bevorzugter mindestens 3, bevorzugter mindestens 5, am bevorzugtesten mindestens 10, Öffnung(en) beinhaltet.

Das Weichbonbon 2 ist nach der Ausführungsform 5 ausgebildet, wobei die Öffnung gekennzeichnet ist durch eine Breite in einem Bereich von 0,5 bis 3 mm, bevorzugt von 1 bis 3 mm, bevorzugter von 2 bis 3 mm. Hierbei ist die Breite der Öffnung die größte Ausdehnung der Öffnung entlang einer Gerade in einer Öffnungsebene.

Es wird auch offengelegt ein Weichbonbon 3, wobei das Weichbonbon eine Grundfläche beinhaltet, wobei das Weichbonbon gekennzeichnet ist durch einen Durchmesser in einer Ebene parallel zu der Grundfläche, wobei eine Abhängigkeit einer Länge des Durchmessers von einer Position auf einer Geraden senkrecht zu der Grundfläche beschreibbar ist durch eine Durchmesserfunktion, wobei die Durchmesserfunktion eine nicht monotone Funktion ist oder wobei die Durchmesserfunktion mindestens 2 Maxima, bevorzugt mindestens 3 Maxima, bevorzugter mindestens 4 Maxima, beinhaltet. Ein bevorzugtes Maximum ist ein globales Maximum oder ein lokales Maximum. Besonders bevorzugt ist ein lokales Maximum.

Es wird auch offengelegt einWeichbonbon 4, wobei das Weichbonbon ein Loch beinhaltet, wobei das Loch eine Tiefe von mindestens 3 mm, bevorzugt von mindestens 4 mm, bevorzugter von mindestens 5 mm, bevorzugter von mindestens 7 mm, am bevorzugtesten von mindestens 10 mm, hat, oder das Loch ein Tunnel ist, wobei die Tiefe eine Länge des Tunnels durch das Weichbonbon ist. oder wobei das Loch eine Vertiefung ist.

Es wird auch offengelegt ein Weichbonbon 5, wobei eine Gesamtoberfläche des Weichbonbons mit keinem Mehl zu mehr als 0,05 Gew.-%, bevorzugt zu mehr als 0,03 Gew.-%, bevorzugter zu mehr als 0,01 Gew.-%, jeweils bezogen auf das Gewicht des Weichbonbons überlagert ist, oder wobei die Gesamtoberfläche des Weichbonbons mit keinem Stärkemehl zu mehr als 0,05 Gew.-%, bevorzugt zu mehr als 0,03 Gew.-%, bevorzugter zu mehr als 0,01 Gew.-%, jeweils bezogen auf das Gewicht des Weichbonbons überlagert ist, oder wobei die Gesamtoberfläche des Weichbonbons mit keinem Maisstärkemehl zu mehr als 0,05 Gew.-%, bevorzugt zu mehr als 0,03 Gew.-%, bevorzugter zu mehr als 0,01 Gew.-%, jeweils bezogen auf das Gewicht des Weichbonbons überlagert ist.

Es wird auch offengelegt ein Weichbonbon 6, wobei das Weichbonbon keine Grundfläche beinhaltet.

Hierbei bilden die Ausführungsformen der jeweiligen Weichbonbons 1 bis 6 ebenfalls bevorzugte Ausführungsformen der jeweiligen Kombination der Weichbonbons 1 bis 6. Beispielhaft gilt: Weichbonbon 1 in Kombination mit Weichbonbon 5 und Ausführungsform 2 des Weichbonbons 5; Weichbonbon 4 in Kombination mit Weichbonbon 5 und Ausführungsform 3 des Weichbonbons 5, Weichbonbon 5 in Kombination mit Weichbonbon 2 und Ausführungsform 2 des Weichbonbons 2.

Einen Beitrag zum mindestens teilweisen Erfüllen einer der erfindungsgemäßen Aufgaben leistet eine Ausführungsform 1 einer Vorrichtung 1 zum Herstellen eines Weichbonbons, wobei die Vorrichtung eine Düse, beinhaltend eine Austrittsöffnung und eine Weichbonbonvorläufermasse, beinhaltet;
wobei die Weichbonbonvorläufermasse gekennzeichnet ist durch einen Wassergehalt in einem Bereich von 17 bis 22 Gew.-%, jeweils bezogen auf die Weichbonbonvorläufermasse;
wobei die Düse
   a. über einem Substrat angeordnet ist, und
   b. so ausgebildet und angeordnet ist, dass die Austrittsöffnung an jeden Punkt eines dreidimensionalen Arbeitsvolumens über dem Substrat bewegt werden kann.

Eine erfindungsgemäße Ausführungsform 2 der Vorrichtung 1 ist nach der Ausführungsform 1 ausgebildet, wobei die Weichbonbonvorläufermasse in der Düse einen Polyzucker in einem Bereich von 1,2 bis 2,5 Gew.-%, bevorzugt von 1,5 bis 2,3 Gew.-%, bevorzugter von 1,8 bis 2,1 Gew.-%, jeweils bezogen auf das Gewicht der Weichbonbonvorläufermasse beinhaltet. Eine erfindungsgemäße Ausführungsform 3 der Vorrichtung 1 ist nach der Ausführungsform 1 oder 2 ausgebildet, wobei die Weichbonbonvorläufermasse in der Düse ein Polypeptid in einem Bereich von 1 bis 10 Gew.-%, bevorzugt von 2 bis 8 Gew.-%, bevorzugter von 3 bis 7 Gew.-%, am bevorzugtesten von 3 bis 6 Gew.-%, jeweils bezogen auf das Gewicht der Weichbonbonvorläufermasse beinhaltet.

Eine erfindungsgemäße Ausführungsform 4 der Vorrichtung 1 ist nach einer der Ausführungsformen 1 bis 3 ausgebildet, wobei die Weichbonbonvorläufermasse gekennzeichnet ist durch einen pH-Wert in einem Bereich von 3,0 bis 4,5, bevorzugt von 3,2 bis 4,2, bevorzugter von 3,3 bis 4,0, weiterhin bevorzugt von 3,4 bis 3,9 und ferner bevorzugt von 3,5 bis 3,7.

Eine erfindungsgemäße Ausführungsform 5 der Vorrichtung 1 ist nach einer der Ausführungsformen 1 bis 4 ausgebildet, wobei die Weichbonbonvorläufermasse in der Düse gekennzeichnet ist durch eine Temperatur in einem Bereich von 45 bis 95°C, bevorzugt von 50 bis 90°C, bevorzugter von 55 bis 80°C, bevorzugter von 55 bis 75°C, bevorzugter von 55 bis 70°C, am bevorzugtesten von 60 bis 66°C.

Eine erfindungsgemäße Ausführungsform 6 der Vorrichtung 1 ist nach einer der Ausführungsformen 1 bis 5 ausgebildet, wobei die Austrittsöffnung eine Öffnungsfläche in einem Bereich von 0,1 bis 3 mm², bevorzugt von 0,3 bis 3 mm², bevorzugter von 0,4 bis 1,7 mm², bevorzugter von 0,5 bis 1,2 mm², hat.

Eine erfindungsgemäße Ausführungsform 7 der Vorrichtung 1 ist nach einer der Ausführungsformen 1 bis 6 ausgebildet, wobei die Vorrichtung weiter
i) eine düsenseitig vor der Austrittsöffnung fluidleitend mit der Austrittsöffnung verbundene Mischkammer;
ii) einen mit der Mischkammer fluidleitend verbundenen ersten Behälter, wobei der erste Behälter eine Basismasse beinhaltet; und
iii) einen mit der Mischkammer fluidleitend verbundenen weiteren Behälter, wobei der weitere Behälter eine Säure beinhaltet,
beinhaltet.

Eine erfindungsgemäße Ausführungsform 8 der Vorrichtung 1 ist nach einer der Ausführungsformen 1 bis 7 ausgebildet, wobei die Vorrichtung weiter eine Antriebseinheit beinhaltet, wobei die Antriebseinheit ausgebildet ist zum Antreiben einer Bewegung der Düse relativ zu dem Substrat.

Eine erfindungsgemäße Ausführungsform 9 der Vorrichtung 1 ist nach einer der Ausführungsformen 1 bis 8 ausgebildet, wobei die Vorrichtung weiter eine Ansteuerungseinheit beinhaltet, wobei die Ansteuerungseinheit ausgebildet ist zum Ansteuern einer Bewegung der Düse, oder eines Austretens der Weichbonbonvorläufermasse aus der Austrittsöffnung, oder von beidem.

Eine erfindungsgemäße Ausführungsform 10 der Vorrichtung 1 ist nach der Ausführungsform 9 ausgebildet, wobei die Ansteuerungseinheit eine Ansteuerungssoftware beinhaltet.

Eine erfindungsgemäße Ausführungsform 11 der Vorrichtung 1 ist nach einer der Ausführungsformen 1 bis 10 ausgebildet, wobei die Vorrichtung weiter einen elektronischen Datenspeicher beinhaltet, wobei der elektronische Datenspeicher ein Modell des Weichbonbons beinhaltet.

Eine erfindungsgemäße Ausführungsform 12 der Vorrichtung 1 ist nach der Ausführungsform 11 ausgebildet, wobei das Modell ein CAD-Modell ist.

Einen Beitrag zum mindestens teilweisen Erfüllen einer der erfindungsgemäßen Aufgaben leistet eine Ausführungsform 1 eines Verfahrens 2 zum Herstellen eines Weichbonbons mit der Vorrichtung 1 nach einem der Ausführungsformen 1 bis 12.

Einen Beitrag zum mindestens teilweisen Erfüllen einer der erfindungsgemäßen Aufgaben leistet eine Ausführungsform 1 einer Verwendung 1 einer Weichbonbonvorläufermasse, gekennzeichnet durch einen Wassergehalt in einem Bereich von 15 bis 24 Gew.-%, bevorzugt von 16 bis 23 Gew.-%, bevorzugter von 17 bis 22 Gew.-%, jeweils bezogen auf die Weichbonbonvorläufermasse, zu einem Herstellen eines Weichbonbons mittels Formen der Weichbonbonvorläufermasse durch eine Düse.

Einen Beitrag zum mindestens teilweisen Erfüllen einer der erfindungsgemäßen Aufgaben leistet eine Ausführungsform 1 einer Verwendung 2 der Vorrichtung 1 nach einer der Ausführungsformen 1 bis 12 zu einem Herstellen eines Weichbonbons.

Bevorzugte Komponenten und Bestandteile einer erfindungsgemäßen Ausführungsform einer Kategorie der Erfindung sind auch in weiteren Ausführungsformen der anderen Kategorien der Erfindung für gleichnamige oder äquivalente Komponenten und Bestandteile bevorzugt.

### Weichbonbon

Ein Weichbonbon hat bevorzugt eine hochviskose, zähe Konsistenz. Weichbonbons werden bevorzugt beim Verzehr gekaut. Bei dem Kauen löst sich das Weichbonbon bevorzugt nach und nach auf. Ein bevorzugtes Weichbonbon hat einen Wassergehalt in einem Bereich von 1 bis 20 Gew.-%, bevorzugt in einem Bereich von 5 bis 20 Gew.-%, bevorzugter in einem Bereich von 10 bis 20 Gew.-%, am bevorzugtesten in einem Bereich von 15 bis 20 Gew.-%, bezogen auf das Gesamtgewicht des Weichbonbons. Ein bevorzugtes Weichbonbon ist elastisch verformbar. Ein besonders bevorzugtes Weichbonbon hat eine Shore-Härte A von 70 oder kleiner, bevorzugt von 65 oder kleiner, bevorzugter von 60 oder kleiner, bevorzugter von 55 oder kleiner, bevorzugter von 50 oder kleiner, bevorzugter von 45 oder kleiner, bevorzugter von 40 oder kleiner, bevorzugter von 35 oder kleiner, bevorzugter von 30 oder kleiner, bevorzugter von 25 oder kleiner, bevorzugter von 20 oder kleiner, noch bevorzugter von 20 oder kleiner, noch bevorzugter von 15 oder kleiner, am bevorzugtesten von 10 oder kleiner. Ein weiteres bevorzugtes Weichbonbon ist eines ausgewählt aus der Gruppe bestehend aus einem Fruchtgummibonbon, einem Weingummibonbon, einem Toffee und einem Kaubonbon oder eine Kombination von mindestens zwei davon. Ein weiteres bevorzugtes Weichbonbon beinhaltet ein Hydrokolloid. Ein bevorzugtes Hydrokolloid ist Gelatine. Ein besonders bevorzugtes Weichbonbon beinhaltet keinen Inhaltsstoff tierischen Ursprungs, ist also vegan. Weiterhin ist es bevorzugt, dass das erfindungsgemäße Weichbonbon weniger als 0,5 g/kg Weichbonbon, vorzugsweise weniger als 0,2 g/kg Weichbonbon und weiterhin bevorzugt weniger als 0,1 g/kg Weichbonbon Theobromin oder ein Theobrominderivat aufweist. Ferner ist es bevorzugt, dass das erfindungsgemäße Weichbonbon kein Theobromin oder ein Theobrominderivat aufweist. Zudem ist es bevorzugt, dass das erfindungsgemäße Weichbonbon weniger als 15 Gew.-% des Weichbonbon, vorzugsweise weniger als 5 Gew.-% des Weichbonbons und weiterhin bevorzugt weniger als 0,1 Gew.-% des Weichbonbons Kakaobutter aufweist. Ferner ist es bevorzugt, dass das erfindungsgemäße Weichbonbon keine Kakaobutter aufweist. Weichbonbons einer bevorzugten Ausführungsform der Erfindung entsprechen den Gummibonbon im Sinne der Ziffer D 3.2 auf Seite 9 der Richtlinie für Zuckerwaren des Bund für Lebensmittelrecht und Lebensmittelkunde e. V., Auflage 2012.

### Weichbonbonvorläufermasse

Eine Weichbonbonvorläufermasse ist eine Masse, aus der durch Weiterverarbeitung ein Weichbonbon hergestellt werden kann. Eine bevorzugte Weichbonbonvorläufermasse beinhaltet als wesentlichen Bestandteil einen Zucker oder einen Zuckeraustauschstoff oder beides. Ein bevorzugter Zucker ist einer ausgewählt aus der Gruppe bestehend aus einem Polysaccharid, Saccharose, Glucose, Fruktose und Invertzucker oder eine Kombination von mindestens zwei davon. Ein bevorzugter Zuckeraustauschstoff ist einer ausgewählt aus der Gruppe bestehend aus Isomalt, Mannit, Sorbit, Xylit und Polydextrose oder eine Kombination von mindestens zwei davon. Eine weitere bevorzugte Weichbonbonvorläufermasse beinhaltet weiter eines ausgewählt aus der Gruppe bestehend aus einer Milchzubereitung, einem pflanzlichen Fett, einem Emulgator, einer Farbmischung, einem Öl, einem Wirkstoff, einem Pflanzenextrakt und einem Aroma oder eine Kombination aus mindestens zwei davon. Ein bevorzugtes Öl ist ein ätherisches Öl. Ein bevorzugtes ätherisches Öl ist eines ausgewählt aus der Gruppe bestehend aus einem Eukalyptusöl, einem Minzöl und einem Menthol oder eine Kombination von mindestens zwei davon. Ein bevorzugter Wirkstoff zeigt eines ausgewählt aus der Gruppe bestehend aus einer schleimlösenden Wirkung, einer schmerzbetäubenden Wirkung, einer schwellungslindernden Wirkung und einer entzündungshemmenden Wirkung oder eine Kombination von mindestens zwei davon. Ein bevorzugter Pflanzenextrakt ist einer ausgewählt aus der Gruppe bestehend aus einem Kräuterextrakt, einem Wurzelextrakt und einem Rindenextrakt oder eine Kombination von mindestens zwei davon. Ein bevorzugter Kräuterextrakt ist ein Extrakt aus einem ausgewählt aus der Gruppe bestehend aus Salbei, Spitzwegerich, Schlüsselblume und Eibisch oder eine Kombination von mindestens zwei davon. Ein bevorzugter Wurzelextrakt ist ein Süßholzwurzelextrakt, oft auch als Lakritze bezeichnet. Ein bevorzugtes Aroma ist ein künstliches Aroma oder ein natürliches Aroma oder beides. Ein weiteres bevorzugtes Aroma ist ein Fruchtaroma. Eine besonders bevorzugte Weichbonbonvorläufermasse beinhaltet keinen Inhaltsstoff tierischen Ursprungs, ist also vegan.

Vorzugsweise liegt die Weichbonbonvorläufermasse als flüssiges Gel vor, welches eine komplexe Viskosität in einem Bereich von 500 bis 5000 Pa·s, besonders bevorzugt in einem Bereich von 1600 bis 4000 Pa·s und mehr bevorzugt in einem Bereich von 1000 bis 3000 Pa·s aufweist. Weiterhin ist es in diesem Zusammenhang bevorzugt, dass die Weichbonbonvorläufermasse ein Verlustmodul in einem Bereich von 1000 bis 13000 Pa, besonders bevorzugt in einem Bereich von 3000 bis 10000 Pa und mehr bevorzugt in einem Bereich von 4000 bis 6000 Pa aufweist. Auch ist es in diesem Zusammenhang bevorzugt, dass die Weichbonbonvorläufermasse ein Speichermodul in einem Bereich von 5000 bis 50000 Pa, besonders bevorzugt in einem Bereich von 15000 bis 35000 Pa und mehr bevorzugt in einem Bereich von 20000 bis 25000 Pa aufweist.

### Durchmesser

Ein Durchmesser eines Weichbonbons ist eine Gerade, welche genau von einem ersten Punkt einer Außenoberfläche des Weichbonbons zu einem zweiten Punkt der Außenoberfläche des Weichbonbons verläuft und dabei den geometrischen Mittelpunkt einer Ebene des Weichbonbons in der die Gerade liegt schneidet. Hierbei bezieht sich der geometrische Mittelpunkt auf eine Außenform des Weichbonbons.

### Loch

Ein Loch kann eine Vertiefung oder ein Tunnel sein. Eine Vertiefung beinhaltet eine Eingangsfläche, wobei die Eingangsfläche immateriell ist, und eine Endfläche, wobei die Endfläche eine Oberfläche des Weichbonbons ist. Ein Tunnel beinhaltet eine Eingangsfläche, wobei die Eingangsfläche immateriell ist, und eine Endfläche, wobei die Endfläche immateriell oder eine Oberfläche des Weichbonbons sein kann. Somit kann ein Tunnel durch das Weichbonbon hindurch verlaufen, also einen Eingang und einen Ausgang beinhalten. Ferner kann ein Tunnel einen Eingang beinhalten und in dem Weichbonbon enden. Ein bevorzugtes Loch ist mindestens teilweise mit einem ausgewählt aus der Gruppe bestehend aus einer Flüssigkeit, einer Creme, einem Gel und einem Pulver oder mit einer Kombination aus mindestens zwei davon gefüllt. Hierbei ist eine bevorzugte Flüssigkeit ein Saft, bevorzugt ein Fruchtsaft. Ein bevorzugtes Pulver ist ein Brausepulver.

### Antriebseinheit

Eine bevorzugte Antriebseinheit ist ein Aktor oder ein Motor oder beides. Ein bevorzugter Motor ist ein Schrittmotor.

### CAD

CAD steht für computer-aided design, also rechnerunterstütztes Konstruieren. Rechnergestützt bedeutet in diesem Zusammenhang mittels EDV (elektronischer Datenverarbeitung).

### Innenraum

Für den Gebrauch in diesem Dokument ist ein Innenraum ein Volumen dessen gedachte Oberfläche zu mindestens 50 % der Oberfläche mit der Wandung des Weichbonbons kontaktiert ist.

### Grundfläche

Eine Grundfläche eines Weichbonbons ist bevorzugt ausgebildet zum Ablegen oder Abstellen des Weichbonbons auf einer ebenen Unterlage durch Kontaktieren der Grundfläche mit der ebenen Unterlage. Bevorzugt ist die Grundfläche eben ausgebildet. Eine weitere bevorzugte Grundfläche kann bedingt durch ein Trocknen des Weichbonbons von einer ebenen Ausgestaltung abweichen. In jedem Fall wird durch Ablegen oder Abstellen des Weichbonbons mit der Grundfläche auf einer ebenen Unterlage das Weichbonbon in einer stabilen Lage abgelegt oder abgestellt. Eine weitere bevorzugte Grundfläche beinhaltet keine Prägung. Eine weitere bevorzugte Grundfläche befindet sich gegenüber einer geprägten Seite des Weichbonbons.

### Säure

Unter den Begriff Säure fallen sowohl die freien Säuren als auch die Salze der Säuren sowie Anhydride der Säuren. Eine bevorzugte Säure ist eine organische Säure. Bevorzugt handelt es sich bei der Säure um eine Carbonsäure, vorzugsweise eine Zweifach- oder Mehr-alszweifach-Carbonsäure, besonders bevorzugt eine Tri-Carbonsäure. Es ist bevorzugt, dass die erfindungsgemäßen Säuren 2 bis 20, vorzugsweise 2 bis 7 und besonders bevorzugt 3 bis 4 C-Atome je Molekül enthalten. Bevorzugt wird erfindungsgemäß eine wasserfreie Säure eingesetzt. Hierunter ist eine Säure ausgewählt aus der Gruppe bestehend aus Oxal-, Malon-, Bernstein-, Glutar-, Adipin-, Pimelin-, Kork-, Azelain-, Sebazin-, Brassyl-, Thapisa- Zitronen-, Apfel-, und Milchsäure, oder eine Kombination aus mindestens zwei davon bevorzugt. In einer anderen Ausgestaltung der Erfindung sind Hydroxycarbonsäuren als Säuren bevorzugt, wobei zwei- oder mehr-als-zwei-Caboxylgruppen-tragende Hydroxycarbonsäuren besonders bevorzugt sind. Erfindungsgemäß bevorzugte Hydroxycarbonsäuren sind ausgewählt aus der Gruppe bestehend aus Zitronen-, Apfel-, und Milchsäure, oder eine Kombination aus mindestens zwei davon. Zitronensäure, insbesondere wasserfreie Zitronensäure, ist erfindungsgemäß besonders bevorzugt.

### Basismasse

Eine bevorzugte Basismasse beinhaltet denselben Polyzucker oder dasselbe Polypeptid oder beides wie die Weichbonbonvorläufermasse.

### Grundmasse

Eine bevorzugte Grundmasse beinhaltet denselben Polyzucker oder dasselbe Polypeptid oder beides wie die Weichbonbonvorläufermasse. Im Gegensatz zur Säuremasse weißt die Grundmasse mehr Gelbildner, vorzugsweise Polyzucker wie Pektin oder Polypeptide wie Gelatine oder beide, auf, wobei ein Anteil, jeweils bezogen auf das Trockengewicht der Grundmasse, in einem Bereich von 0,1 bis 15 Gew.-%, in einem Bereich von 1 bis 10 Gew.-% bevorzugt und in einem Bereich von 1,5 bis 5 Gew.-% besonders bevorzugt ist. Die nachstehenden Ausführungen zu "Polyzucker" gelten ebenso für die in der Grundmasse eingesetzten Monozucker. Vorzugsweise weist die Grundmasse Monozucker, jeweils bezogen auf das Trockengewicht der Grundmasse, in einem Bereich von 40 bis 80 Gew.-%, vorzugsweise in einem Bereich von 50 bis 70 Gew.-% und besonders bevorzugt in einem Bereich von 55 bis 65 Gew.-% auf. Weiterhin weist die Grundmasse vorzugsweise einen Wassergehalt, jeweils bezogen auf das Gesamtgewicht der Grundmasse, in einem Bereich von 7 bis 45 Gew.-%, vorzugsweise in einem Bereich von 10 bis 35 Gew.-% und besonders bevorzugt in einem Bereich von 15 bis 25 Gew.-% auf. In einer Ausführungsform weist die Grundmasse eine komplexe Viskosität in einem Bereich von 700 bis 1300 Pa·s, besonders bevorzugt in einem Bereich von 1000 bis 1250 Pa·s und mehr bevorzugt in einem Bereich von 1100 bis 1200 Pa·s auf. In einer Ausführungsform weist die Grundmasse ein Verlustmodul in einem Bereich von 3000 bis 7000 Pa, besonders bevorzugt in einem Bereich von 4000 bis 5500 Pa und mehr bevorzugt in einem Bereich von 4700 bis 5200 Pa auf. In einer Ausführungsform weist die Grundmasse ein Speichermodul in einem Bereich von 5000 bis 15000 Pa, besonders bevorzugt in einem Bereich von 9000 bis 13000 Pa und mehr bevorzugt in einem Bereich von 10000 bis 12000 Pa auf.

### Säuremasse

Eine bevorzugte Säuremasse beinhaltet mehr von derselben Säure wie die Weichbonbonvorläufermasse. Im Gegensatz zur Grundmasse weißt die Säuremasse mehr Säure, vorzugsweise organische Säure wie Zitronensäure auf, wobei ein Anteil, jeweils bezogen auf das Trockengewicht der Säuremasse, in einem Bereich von 0,1 bis 15 Gew.-%, in einem Bereich von 0,5 bis 10 Gew.-% bevorzugt und in einem Bereich von 1 bis 4 Gew.-% besonders bevorzugt ist. Die vorstehenden Ausführungen zur "Säure" gelten ebenso für die in der Säuremasse eingesetzten Säuren. Vorzugsweise weist die Säuremasse Monozucker, jeweils bezogen auf das Trockengewicht der Grundmasse, in einem Bereich von 40 bis 80 Gew.-%, vorzugsweise in einem Bereich von 50 bis 70 Gew.-% und besonders bevorzugt in einem Bereich von 55 bis 65 Gew.-% auf. Weiterhin weist die Säuremasse vorzugsweise einen Wassergehalt, jeweils bezogen auf das Gesamtgewicht der Säuremasse, in einem Bereich von 7 bis 45 Gew.-%, vorzugsweise in einem Bereich von 10 bis 35 Gew.-% und besonders bevorzugt in einem Bereich von 15 bis 25 Gew.-% auf. In einer Ausführungsform der Erfindung weist die Säuremasse vorzugswiese einen Wassergehalt, jeweils bezogen auf das Gesamtgewicht der Säuremasse, in einem Bereich von 3 bis 45 Gew.-%, vorzugsweise in einem Bereich von 5 bis 30 Gew.-% und besonders bevorzugt in einem Bereich von 8 bis 20 Gew.-% auf. In einer Ausführungsform weist die Grundmasse eine komplexe Viskosität in einem Bereich von 5 bis 50000 Pa·s, besonders bevorzugt in einem Bereich von 300 bis 20000 Pa·s und mehr bevorzugt in einem Bereich von 600 bis 9000 Pa·s auf. In einer Ausführungsform weist die Grundmasse ein Verlustmodul in einem Bereich von 50 bis 500000 Pa, besonders bevorzugt in einem Bereich von 2500 bis 100000 Pa und mehr bevorzugt in einem Bereich von 5000 bis 50000 Pa auf. In einer Ausführungsform weist die Grundmasse ein Speichermodul in einem Bereich von 10 bis 75000 Pa, besonders bevorzugt in einem Bereich von 1800 bis 50000 Pa und mehr bevorzugt in einem Bereich von 3500 bis 15000 Pa auf.

### Polyzucker

Unter dem Begriff Polyzucker wird erfindungsgemäß ein aus mindestens 3, vorzugsweise mindestens 10 und besonders bevorzugt mindestens 20 Zuckereinheiten gebildetes Molekül verstanden. Dieses Molekül beinhaltet vorzugsweise zu 50 Gew.-% und mehr, vorzugsweise zu 55 Gew.-% und mehr, und besonders bevorzugt zu 65 Gew.-% und mehr, Galacturonsäure, vorzugsweise α-D- Galacturonsäure. Als einen weiteren Monozucker kann das Molekül Rhamnose beinhalten. Ferner ist es bevorzugt, dass die Hydroxygruppen am C₂- oder C₃-Atom der Galacturonsäureeinheiten mindestens teilweise acetyliert oder durch weitere Neutralzucker, insbesondere D-Galactose, D-Xylose, L-Arabinose oder L-Rhamnose, substituiert sind. Weiterhin ist es bevorzugt, dass die Moleküle verzweigt sind. Die Verzweigung erfolgt vorzugsweise über die Galacturonsäure der Hauptkette.

Außerdem ist es bevorzugt, dass die Moleküle mindestens teilweise verestert sind, wobei eine Veresterung mit einem Alkohol, der vorzugsweise ein C₁ bis C₁₀-, vorzugsweise C₁ bis C₅-, und besonders bevorzugt ein C₁ bis C₃-Kohlenwasserstoff ist, bevorzugt ist. Die Veresterung mit Methanol ist besonders bevorzugt. Es ist weiterhin bevorzugt, dass der als Veresterungsgrad bezeichnete Anteil der veresterten Carboxylgruppen der Zucker in einem Bereich von 50 bis 80 %, vorzugsweise in einem Bereich von 52 bis 70 %, bevorzugter in einem Bereich von 55 bis 65 %, besonders bevorzugt in einem Bereich von 59 bis 61 %, liegt.

Erfindungsgemäß sind Pektine als Polyzucker besonders bevorzugt. Hierunter fallen insbesondere Citrus-Pektine und Apfel-Pektine. Diese sind beispielsweise bei den Herbstreith & Fox KG Pektin-Fabriken kommerziell erhältlich.

Der erfindungsgemäße Polyzucker zeigt bevorzugt einen USA-SAG (SAG - Strain-induced Alignement in a Gel) von mindestens 150° USA-SAG, bevorzugt mindestens 160° USA-SAG, und besonders bevorzugt mindestens 170° USA-SAG. Je höher der USA-SAG-Wert, um so höher ist der Veresterungsgrad.

### Polypeptid

Unter dem Begriff Polypeptid wird erfindungsgemäß ein aus mindestens 10, vorzugsweise mindestens 50 und besonders bevorzugt mindestens 70 Aminosäuren gebildetes Molekül verstanden. Vorzugsweise haben die erfindungsgemäßen Polypeptide ein Molekulargewicht von mindesten 10.000 g/mol, vorzugsweise mindestens 25.000 g/mol und besonders bevorzugt mindestens 100.000 g/mol. Molekulargewichte oberhalb 300.000 g/mol gelten häufig als Obergrenze. Weiterhin beinhaltet das erfindungsgemäße Polypeptid weniger als 5 Gew.-%, vorzugsweise weniger als 3 Gew.-% und besonders bevorzugt weniger als 0,5 Gew.-%, jeweils bezogen auf das Gesamtgewicht des Polypeptids, Tryptophan. Bevorzugte erfindungsgemäße Polypeptide sind frei von Tryptophan. Erfindungsgemäß bevorzugte Polypeptide sind Gelatine. Bevorzugte Polypetide weisen einen isoelektrischen Punkt (IEP) im Bereich eines pH-Werts von 4,7 bis 5,3, bevorzugt von 4,8 bis 5,2, bevorzugter von 4,9 bis 5,1, auf. Weitere bevorzugte Polypeptide weisen einen isoelektrischen Punkt im Bereich von 7,7 bis 9,3, bevorzugt von 7,8 bis 9,2 bevorzugter von 7,9 bis 9,1, am bevorzugtesten von 8 bis 9, auf. Bevorzugte Polypetide weisen eine Bloomzahl im Bereich von 140 bis 300, vorzugsweise in einem Bereich von 200 bis 280 und besonders bevorzugt in einem Bereich von 220 bis 270 auf.

### Messmethoden

Die folgenden Messmethoden wurden im Rahmen der Erfindung benutzt. Sofern nichts anderes angegeben ist wurden die Messungen bei einer Umgebungstemperatur von 25°C, einem Umgebungsluftdruck von 100 kPa (0,986 atm) und einer relativen Luftfeuchtigkeit von 50 % durchgeführt.

### Shore-Härte

Zum Messen der Shore-Härte wurde das Verfahren gemäß VDI/VDE 2616-Blatt 2 (2004-04): "Härteprüfung an Kunststoffen und Gummi" eingesetzt.

### Bloomzahl

Die Gelierkraftmessung bei Gelatine erfolgt über ein Bloomgelometer. Die Messung wird wie in United States Pharmacopeia XX, S. 1017 (1990) beschrieben durchgeführt.

### Isoelektrischer Punkt

Wie alle anderen Proteine besitzt auch Gelatine amphotere Eigenschaften. Deshalb gibt es einen pH-Wert, an dem die (positive) elektrische Ladung der Aminogruppen der der (negativen) Ladung der Carboxylgruppen entspricht. Dieser isoelektrische Punkt der Gelatine ist von der Herstellungsart abhängig (saurer Aufschluss 4,7 bis 5,2, alkalischer Aufschluss 8 bis 9). Am isoelektrischen Punkt ist die Löslichkeit der Gelatine am geringsten, was als Bestimmungsmethode dienen kann (stärkste Trübung des Gels).

### Wassergehalt

Für die Messung des Wassergehalts werden folgende Gerät verwendet: ein Feuchtebestimmer Sartorius MA 30 (Sartorius AG, Göttingen, Deutschland), Aluminium-Einwegschale, Löffel. Der Feuchtebestimmer wird vor der Messung nicht vorgewärmt. Wurde bereits eine Messung mit dem Feuchtebestimmer durchgeführt, wird der Feuchtebestimmer vor einer weiteren Messung mindestens 15 Minuten bei offener Haube abkühlend belassen. Der Feuchtebestimmer wird eingeschaltet. Die Messparameter sind 105°C (Trocknungstemperatur), Auto, 0 - 100 %. Die Haube wird geöffnet und eine Aluminiumschale aufgelegt. Mit der Enter-Taste wird tariert. Eine Probe mit einer Masse in einem Bereich von 5,0 bis 5,5 g wird bereitgestellt. Die Alumniumschale wird auf einen Tisch gestellt und die Probe mit dem Löffel gleichmäßig auf der Schale verteilt. Die Schale wird auf den Halter aufgesetzt und die Haube geschlossen. Der Feuchtebestimmer startet der Messvorgang automatisch. Zeigt der Feuchtebestimmer "END" an wird das Messergebnis abgelesen.

### pH-Wert

5g einer Probe werden mit 95g destilliertem Wasser versetzt und gelöst. Die so erhaltenen Lösung wird zur pH-Wertbestimmung mit einem WTW-Taschen-pH-Meter pH 3210 eingesetzt. Die Messung erfolgt bei Raumtemperatur.

### USA-SAG

Der USA-SAG-Wert beschreibt die Gelierkraft von Pektin. Zur Bestimmung des USA-SAG wird ein Zucker-Wasser-Gel mit 65 % Trockensubstanz und einem pH-Wert von 2,2 als Norm-Gel gekocht und in einem genormten Becher heiß abgefüllt. Nach dem Erkalten wird das Gel jeweils aus dem Becher gestürzt und das prozentuale Einsinken durch das Eigengewicht des Gels nach einer definierten Zeit gemessen. Das Norm-Gel sinkt innerhalb von 2 Minuten um 23,5 % ein. Der USA-SAG-Wert für beliebige Gele gibt an, wieviel Gramm Zucker nötig sind, um mit 1,0 g Pektin dasselbe Messergebnis wie für das Norm-Gel zu erhalten. Je höher der US-SAG-Wert ist, desto stärker ist die Gelierkraft des Pektins.

### Komplexe Viskosität, Verlustmodul und Speichermodul

Die komplexe Viskosität, das "in-Phase"-Speichermodul und das "außer Phase"-Verlustmodul werden mittels einen Rheometrics ARES-Rheometers, welches auf 10 rads/s und mit einer Scheramplitude von 1 % eingestellt wird, bestimmt. Die Probe wird zwischen zwei parallel 25 mm-Platten eingebracht und in einer Stickstoffatmosphäre auf die gewünschte Temperatur gebracht.

### Beispiele

Die Erfindung wird im Folgenden durch Beispiele und Zeichnungen genauer dargestellt, wobei die Beispiele und Zeichnungen keine Einschränkung der Erfindung bedeuten. Die Zeichnungen sind, sofern nicht anders angegeben, nicht maßstabsgetreu.

### Herstellung der Basismassen 1 und 2

In einen 5 l Satzkocher werden trocken 375 g Zucker der EU-Kategorie 2 der Pfeifer & Langen GmbH & Co. KG trocken mit 16 g Pektin mit einem USA-SAG von 170° USA-SAG der Cargill GmbH als Polyzucker homogen gemischt, um eine Klumpenbildung zu vermeiden. Dazu werden 57 g Maltodextrin von Roquette SA als Oligozucker sowie KaNa-Tatrat und Ka-Citrat als Puffersalzmischung in einer Menge von 13 g gegeben. Der so erhaltenen Trockenmischung werden 200 g Wasser unter Rühren zugesetzt, um einen honigartige, milchige Phase zu erhalten. Zu der Phase werden 295 g Glukosesirup von Roquette SA mit einem Wassergehalt von 20,5 Gew.-% ebenfalls unter Rühren zugesetzt. Die so erhaltene Mischung wird zunächst bis 105°C auf einen Wassergehalt von 25 Gew.-% gekocht.

Zum Erhaltender Basismasse 1 wird eine Portion der gekochten Masse auf Formpuder der Cargill GmbH gegossen, um den Wassergehalt auf einen in Tabelle 1 für die Basismasse 1 angegebenen Wert zu reduzieren.

Zum Erhalten der Basismasse 2 wird eine Portion der wie oben beschrieben gekochten Masse bis 110°C auf einen in Tabelle 1 angegebenen Wassergehalt endgekocht.

**Tabelle 1 - Wassergehalt Basismassen 1 und 2**

| Basismasse 1 | A | B | C | D |
|---|---|---|---|---|
| Wassergehalt [Gew.-%] | 7 | 17 | 22 | 27 |
| Basismasse 2 | A | B | C | D |
| Wassergehalt [Gew.-%] | 7 | 17 | 22 | 27 |

### Herstellung der Basismassen 3 und 4

Zunächst werden die Basismassen 1A bis 1D, und 2A bis 2D mit den in Tabelle 1 angegebenen Werten hergestellt. Zu den so erhaltenen Basismassen wird eine Lösung aus 31 g Gelatine mit einer Bloomzahl von 240 Bloom, die zuvor in 31 g heißem Wasser gelöst wurde, hinzugesetzt, vermischt und zum Entzug des Lösungswassers vakuumiert. Die so erhaltene Masse wird als Basismasse 3 bezeichnet. Eine statt durch Vakuumieren, wie oben beschrieben über Formpuder entwässerte Masse wird als Basismasse 4 bezeichnet. Die Wassergehalte der Basismassen 3 und 4 sind in Tabelle 2 dargestellt.

**Tabelle 2 - Wassergehalt Basismassen 3 und 4**

| Basismasse 3 | A | B | C | D |
|---|---|---|---|---|
| Wassergehalt [Gew.-%] | 7 | 17 | 22 | 27 |

| Basismasse 4 | A | B | C | |
|---|---|---|---|---|
| Wassergehalt [Gew.-%] | 7 | 17 | 22 | 27 |

### Herstellen der Vorläufermassen 1 bis 4

Portionen von jeweils 100 g der Basismassen 1 bis 4 werden in einer Mikrowelle auf unter 100°C erwärmt, um sie zu verflüssigen. Wasserfreie Zitronensäure wird im Gewichtsverhältnis 1 : 0,7 - wasserfreie Zitronensäure : Wasser mit Wasser versetzt. Die so erhaltene wässrige Zitronensäurelösung wird zu den Portionen der flüssigen Basismassen gegeben und vermischt. Die jeweiligen Mengen ergeben sich aus der Tabelle 3.

**Tabelle 3 - Wassergehalt, zugegebene Menge Zitronensäurelösung sowie pH-Wert hergestellter Vorläufermassen**

| Basissismasse | Wassergehalt Basismasse [Gew.-%] | Menge Zitronensäurelösung [g]/pH-Wert/Vorläufermasse # | | | | |
|---|---|---|---|---|---|---|
| 1A | 7 | | | 2,5/3,6/1A3 | | |
| 1B | 18 | 0,5/4,3/1B1 | 1,0/3,9/1B2 | 2,5/3,6/1B3 | 2,8/3,5/1B4 | 5/2,8 /1B5 |
| 1C | 22 | 0,5/4,3/1C1 | 1,0/4/1C2 | 2,5/3,6/1C3 | 2,8/3,5/1C4 | 5/2,8 /1C5 |
| 1D | 27 | | | 2,5/3,6/1D3 | | |
| 2A | 7 | | | 2,5/3,6/2A3 | | |
| 2B | 18 | | | 2,5/3,6/2B3 | | |
| 2C | 22 | | | 2,5/3,6/2C3 | | |
| 2D | 27 | | | 2,5/3,6/2D3 | | |
| 3A | 7 | | | 2,5/3,6/3A3 | | |
| 3B | 18 | 0,5/4,2/3Bl | 1,0/3,9/3B2 | 2,5/3,6/3B3 | 2,8/3,5/3B4 | 5/2,8 /3B5 |
| 3C | 22 | 0,5/4,3/3Cl | 1,0/4/3C2 | 2,5/3,6/3C3 | 2,8/3,5/3C4 | 5/2,8 /3C5 |
| 3D | 27 | | | 2,5/3,6/3D3 | | |
| 4A | 7 | | | 2,5/3,6/4A3 | | |
| 4B | 18 | | | 2,5/3,6/4B3 | | |
| 4C | 22 | | | 2,5/3,6/4C3 | | |
| 4D | 27 | | | 2,5/3,6/4D3 | | |

### Drucken

Unmittelbar nach Zugabe der Zitronensäure werden 5 ml der jeweiligen flüssigen Vorläufermasse in eine handelsübliche 5 ml-Kunststoffeinwegspritze mit einer kreisrunden Abgabeöffnung mit einem Innendurchmesser von 1 mm gefüllt. Direkt nach dem Befüllen der Spritze wurde die Vorläufermasse binnen 25 s über eine Strecke von 5,5 cm in aufeinander liegenden Strängen kontinuierlich abgegeben, um eine Wand als Produkt zu erhalten. Die Beobachtungen und Versuchsergebnisse sind in Tabelle 4 jeweils für die untersuchten Vorläufermassen zusammengestellt.

**Tabelle 4 - Beobachtungen und Versuchsergebnisse**

| Beobachtungen und Versuchsergebnisse | Zerlaufen der Stränge - kein stabiles Produkt (Vergleich) | Stabiles Produkt (erfindungsgemäß) | Nicht verspritzbar - Stocken (Vergleich) |
|---|---|---|---|
| Vorläufermassen | 1D3; 1B1; 1C1; 3D3; 3B1; 3C1 | Stabil: 1B2; 1C2; 1B4; 1C4; 3B2; 3C2; 3B4; 3C4 | 1A3; 1B5; 1C5; 3A3; 3B5; 3C5 |
| Vorläufermassen | | Sehr stabil: 1B3; 1C3; 2B3; 2C3; 3B3; 3C3; 4B3; 4C3 | |

### Auswertung

Aus Tabelle 4 ergibt sich, dass die Vorläufermassen 1B2; 1C2; 1B4; 1C4; 3B2; 3C2; 3B4 und 3C4 zu einer stabilen Wand führen, die jedoch nachgetrocknet werden muss, um die für Fruchtgummis bzw. Weichbonbons typische Weichheit und Stabilität zu erhalten. Die Vorläufermassen 1B3; 1C3; 2B3; 2C3; 3B3; 3C3; 4B3 und 4C3 erreichen die für Fruchtgummis typische Weichheit und Stabilität schon unmittelbar nach dem Drucken der Wand. Die mit den in diesem Absatz genannten Vorläufermassen gedruckten Wände hatten eine Länge von 5,5 cm, eine Höhe von 1 cm und eine Wanddicke von 1,4 mm. Die an den Produkten gemessenen Shore-Härten A liegen unter 10.

Die Vorläufermassen 1D3; 1B1; 1C1; 3D3; 3B1 und 3C1 führen hingegen zu keinen stabilen Wänden. Vielmehr zerlaufen die Stränge zu einer flachen Lache, so dass die dreidimensionale Struktur der Wand nicht erhalten wird. Die Vorläufermassen 1A3; 1B5; 1C5; 3A3; 3B5 und 3C5 stocken bereits in der Spritze, so dass ein Verdrucken nicht möglich ist.

### Grundmasse (GM-1)

In einen 5 l Satzkocher werden trocken 375 g Zucker als Monozucker der EU-Kategorie 2 der Pfeifer & Langen GmbH & Co. KG trocken mit 32 g Pektin als Polyzucker mit einem USA-SAG von 170° der Cargill GmbH als Polyzucker homogen gemischt, um eine Klumpenbildung zu vermeiden. Dazu werden 57 g Maltodextrin von Roquette SA als Oligozucker sowie KaNa-Tatrat und Ka-Citrat als Puffersalzmischung in einer Menge von 26 g gegeben. Der so erhaltenen Trockenmischung werden 400 g Wasser unter Rühren zugesetzt, um eine honigartige, milchige Phase zu erhalten. Zu der Phase werden 295 g Glukosesirup von Roquette SA mit einem Wassergehalt von 20,5 Gew.-% als weiteren Monozucker ebenfalls unter Rühren zugesetzt. Die so erhaltene Mischung wird zunächst bis 105°C auf einen Wassergehalt von 24 Gew.-% gekocht, um die Grundmasse zu erhalten.

### Säuremasse (SM-1)

In einen 5 l Satzkocher werden trocken 375 g Zucker als Monozucker der EU-Kategorie 2 der Pfeifer & Langen GmbH & Co. KG trocken vorgelegt. Dazu wird 57 g Maltodextrin von Roquette SA als Oligozucker gegeben und homogen vermischt. Der so erhaltenen Trockenmischung werden 125 g Wasser unter Rühren zugesetzt, um eine flüssige, milchige Phase zu erhalten. Zu der Phase werden 295 g Glukosesirup von Roquette SA mit einem Wassergehalt von 20,5 Gew.-% als weiteren Monozucker ebenfalls unter Rühren zugesetzt. Die so erhaltene Mischung wird zunächst bis 110°C auf einen Wassergehalt von 10 Gew.-% gekocht. Im Anschluss wird die so erhaltene Masse auf 70°C gekühlt. Zu der gekühlten Masse werden 40 g einer Zitronensäurelösung (1 : 0,7 - wasserfreie Zitronensäure : Wasser) zugesetzt und mit der Masse homogen vermischt, um die Säuremasse zu erhalten. Nach der Zugabe der Zitronensäurelösung hat die Säuremasse einen Wassergehalt von 12 Gew.-%.

### Drucken von GM-1 und SM-1

50g der GM-1 und 50g der SM-1 werden in einem PE-Becher gegeben und homogen mit einem Löffel zu einer Druckmasse bei der in Tabelle 5 angegebenen Temperatur über 15 sec. mit einem Wassergehalt von 18 Gew.-% gemischt. Der pH-Wert wurde unmittelbar nach Ende des Mischens mit 3,6 bestimmt. Unmittelbar danach und nach den in Tabelle 5 angegebenen Zeiträumen werden 5 ml der Druckmasse in eine handelsübliche 5 ml-Kunststoffeinwegspritze mit einer kreisrunden Abgabeöffnung mit einem Innendurchmesser von 1 mm gefüllt. Direkt nach dem Befüllen der Spritze wurde die Druckmasse binnen 25 s über eine Strecke von 5,5 cm in aufeinander liegenden Strängen kontinuierlich abgegeben, um eine Wand als Produkt zu erhalten. Die Beobachtungen und Versuchsergebnisse sind in Tabelle 5 jeweils für die untersuchte Vorläufermasse zusammengestellt.

**Tabelle 5 - Zeit- und Temperaturabhängigkeit des Verdruckens der Vorläufermasse aus Grund- und Säuremasse**

| Versuchs-Nr. | Misch- und Drucktemperatur der Vorläufermasse [°C] | Zeitraum zwischen Fertigstellen und Drucken der Vorläufermasse [sec.] | Druckergebnis |
|---|---|---|---|
| 1. | 10 | 3 | Druckprodukt zerfließt |
| 2. | 20 | 3 | Druckprodukt zerfließt |
| 3. | 20 | 150 | Nicht verdruckbar - Vorläufermasse zu fest |
| 4. | 40 | 3 | Bei geringem Druck verdruckbar - stabiles Druckprodukt |
| 5. | 40 | 15 | Bei höheren Druck als in Versuchs-Nr. 4 - stabiles Druckprodukt |
| 6. | 40 | 70 | Bei höheren Druck als in Versuchs-Nr. 5 - stabiles Druckprodukt |
| 7. | 40 | 130 | Bei höheren Druck als in Versuchs-Nr. 6 - stabiles Druckprodukt |
| 8. | 40 | 300 | Nicht verdruckbar - Vorläufermasse zu fest |
| 9. | 60 | 3 | Bei höheren Druck als in Versuchs-Nr. 7 - stabiles Druckprodukt |
| 10. | 60 | 15 | Nicht verdruckbar - Vorläufermasse zu fest |
| 11. | 60 | 70 | Nicht verdruckbar - Vorläufermasse zu fest |

### Grundmasse (GM-2)

In einen 5 l Satzkocher werden trocken 375 g Zucker als Monozucker der EU-Kategorie 2 der Pfeifer & Langen GmbH & Co. KG trocken mit 32 g Pektin als Polyzucker mit einem USA-SAG von 170° der Cargill GmbH als Polyzucker homogen gemischt, um eine Klumpenbildung zu vermeiden. Dazu werden 57 g Maltodextrin von Roquette SA als Oligozucker sowie KaNa-Tatrat und Ka-Citrat als Puffersalzmischung in einer Menge von 26 g gegeben. Der so erhaltenen Trockenmischung werden 400 g Wasser unter Rühren zugesetzt, um eine honigartige, milchige Phase zu erhalten. Zu der Phase werden 295 g Glukosesirup von Roquette SA mit einem Wassergehalt von 20,5 Gew.-% als weiteren Monozucker ebenfalls unter Rühren zugesetzt. Die so erhaltene Mischung wird zunächst bis 105°C auf einen Wassergehalt von X Gew.-% gekocht, um die Grundmasse zu erhalten.

### Säuremasse (SM-2)

In einen 5 l Satzkocher werden trocken 375 g Zucker als Monozucker der EU-Kategorie 2 der Pfeifer & Langen GmbH & Co. KG trocken vorgelegt. Dazu wird 57 g Maltodextrin von Roquette SA als Oligozucker gegeben und homogen vermischt. Der so erhaltenen Trockenmischung werden 125 g Wasser unter Rühren zugesetzt, um eine flüssige, milchige Phase zu erhalten. Zu der Phase werden 295 g Glukosesirup von Roquette SA mit einem Wassergehalt von 20,5 Gew.-% als weiteren Monozucker ebenfalls unter Rühren zugesetzt. Die so erhaltene Mischung wird zunächst bis 110°C auf einen Wassergehalt von X Gew.-% gekocht. Im Anschluss wird die so erhaltene Masse auf 70°C gekühlt. Zu der gekühlten Masse werden Y g einer Zitronensäurelösung (1 : 0,7 - wasserfreie Zitronensäure : Wasser) zugesetzt und mit der Masse homogen vermischt, um die Säuremasse zu erhalten.

### Drucken von GM-2 und SM-2

50g der GM-2 und 50g der SM-2 werden, wie zuvor für das Drucken von GM-1 und SM-1 beschrieben, eingesetzt und bei einer Temperatur von 40°C binnen 3 Sekunden nach dem Mischen verdruckt. Die Messung des pH-Wertes erfolgte unmittelbar nach dem 15-seküngigen Mischen. Die Wassermengen X und Säuremengen Y werden so gewählt, dass die in Tabelle 6 angegebenen Werte erreicht werden.

**Tabelle 6 - Wassergehalt- und pH-Abhängigkeit**

| | | A | B | C | D | E |
|---|---|---|---|---|---|---|
| Vers. Nr. | pH-Wert | Wasser in Gew.-% | Wasser in Gew.-% | Wasser in Gew.-% | Wasser in Gew.-% | Wasser in Gew.-% |
| 12. | 5 | 10 (----) | 18 (-) | 22 (-) | 25 (--) | 27 (--) |
| 13. | 3,6 | 10 (----) | 18 (+) | 22 (+) | 25 (---) | 27 (---) |
| 14. | 2,8 | 10 (----) | 18 (-) | 22 (-) | 25 (---) | 27 (---) |

| | | | | | | |
|---|---|---|---|---|---|---|
| (-) Formt Gel und kann gedruckt werden, das Druckprodukt ist nicht formstabil und zerfließt langsam. (--) Formt Gel und kann gedruckt werden, das Druckprodukt nimmt keine 3D-Form an, weil es gleich zerfließt. (---) Formt Gel dieses führt zu wiederkehrenden Blockaden in der Spritzenöffnung der 5 ml-Kunststoffeinwegspritze, sodass ein inhomogenes Druckproduckt entsteht, das gleich zerfließt. (----) Kann nicht verdruckt werden - zu hart oder viskos. (+) Bei geringem Druck verdruckbar - stabiles 3-D-Druckprodukt (vgl. Tabelle 5, Nr. 4.), das ein Gummibonbon im Sinne der Ziffer D 3.2 auf Seite 9 der Richtlinie für Zuckerwaren des Bund für Lebensmittelrecht und Lebensmittelkunde e. V., Auflage 2012 ist. | | | | | | |

Die Druckerzeugnisse mit den Bewertungen (-) bis (----) sind keine Gummibonbon im Sinne der Ziffer D 3.2 auf Seite 9 der Richtlinie für Zuckerwaren des Bund für Lebensmittelrecht und Lebensmittelkunde e. V., Auflage 2012.

Es zeigen:
- Figur 1: ein Ablaufdiagramm eines erfindungsgemäßen Verfahrens;
- Figur 2: ein Ablaufdiagramm eines weiteren erfindungsgemäßen Verfahrens;
- Figur 3a): einen schematischen Querschnitt eines Weichbonbons;
- Figur 3b): eine schematische Darstellung eines weiteren Weichbonbons;
- Figur 4: einen schematischen Querschnitt eines weiteren Weichbonbons;
- Figur 5: eine schematische Darstellung eines weiteren Weichbonbons;
- Figur 6a): eine schematische Darstellung eines weiteren Weichbonbons;
- Figur 6b): eine schematische Darstellung eines weiteren Weichbonbons;
- Figur 7a): einen schematischen Querschnitt eines weiteren Weichbonbons;
- Figur 7b): eine schematische Darstellung eines weiteren Weichbonbons;
- Figur 8: eine schematische Darstellung eines weiteren Weichbonbons; und
- Figur 9: eine schematische Darstellung einer erfindungsgemäßen Vorrichtung zum Herstellen eines Weichbonbons.

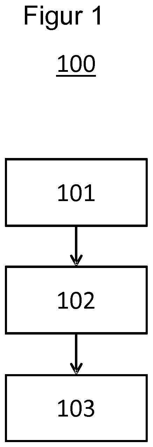

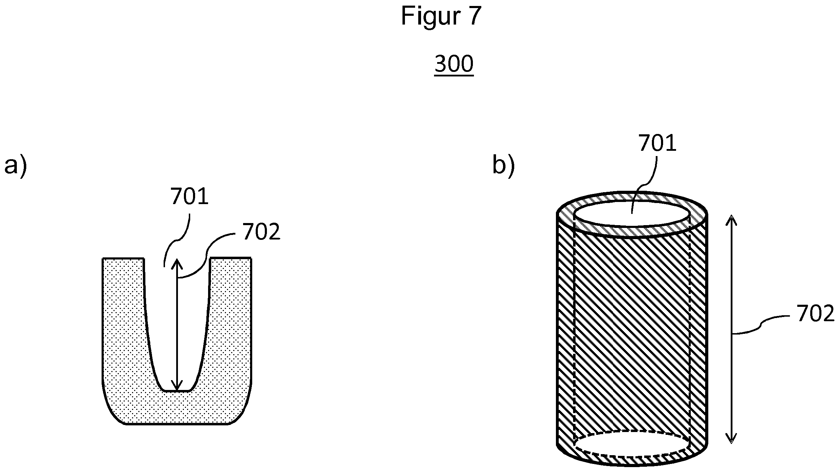

Figur 1 zeigt ein Ablaufdiagramm eines erfindungsgemäßen Verfahrens 100 zum Herstellen eines Weichbonbons 300. In einem Verfahrensschritt a) 101 wird eine Weichbonbonvorläufermasse gemäß der Vorläufermasse 2B3 wie in den obigen Beispielen angegeben bereitgestellt. Hierbei erfolgt das Versetzen der Basismasse 2B mit der Zitronensäurelösung unmittelbar vor einem Beginn eines Verfahrensschritts b) 102. In dem Verfahrensschritt b) wird die Weichbonbonvorläufermasse (Vorläufermasse 2B3) in eine Spritzdüse 901 gegeben und durch Abgeben der Weichbonbonvorläufermasse aus einer Austrittsöffnung 902 der Düse 901 wird die Weichbonbonvorläufermasse zu einem Formkörper geformt. Dies erfolgt durch lagenweises Aufspritzen der Weichbonbonvorläufermasse auf ein Substrat 903. Um den Formkörper mit der Weichbonbonvorläufermasse zu formen, wird hierbei die Düse 901 so geführt, dass die Austrittsöffnung 902 einer spiralförmigen dreidimensionalen Trajektorie 908 folgt. Hierbei beginnt die Trajektorie 908 über dem Substrat 903 und führt nach oben, so dass entlang der dreidimensionalen Trajektorie 908 ein Abstand 910 zwischen der Austrittsöffnung 902 und dem Substrat 903 mehr wird. Somit kann mit dem Verfahren 100 nach Figur 1 das Weichbonbon 300 nach Figur 7b) hergestellt werden. Nach Verfahrensschritt b) 102 wird der Formkörper aus der Weichbonbonvorläufermasse in einem weiteren Schritt 103 gehärtet. Dies erfolgt über 30 Minuten bei einer Temperatur von 30°C.

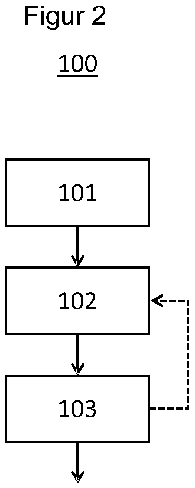

Figur 2 zeigt ein Ablaufdiagramm eines weiteren erfindungsgemäßen Verfahrens 100 zum Herstellen eines Weichbonbons 300. Das Verfahren 100 nach Figur 2 erfolgt wie das Verfahren 100 nach Figur 1, wobei jedoch gemäß Figur 2 das Härten 300 des Formkörpers erst nach Abschluss des Verfahrensschritts b) erfolgt. Stattdessen wird in Verfahrensschritt b) die Weichbonbonvorläufermasse aus der Austrittsöffnung 920 portionsweise abgegeben. Nach jedem Abgeben einer Portion der Weichbonbonvorläufermasse wird diese Portion zunächst gehärtet. Dann wird die Austrittsöffnung 902 an eine nächste Position auf der dreidimensionalen Trajektorie 908 geführt und dann eine nächste Portion der Weichbonbonvorläufermasse abgegeben. Diese Schrittfolge wird so oft wiederholt bis der Formkörper gebildet ist. Dies ist durch die Schleife in dem Ablaufdiagramm (gestrichelter Pfeil) angedeutet. Demnach ist der fertig geformte Formkörper direkt gehärtet und somit das Weichbonbon 300 erhalten. Das Weichbonbon 300 kann weiter einer Nachbehandlung, zum Beispiel einem benetzen mit einem Puder gegen ein Anhaften des Weichbonbons 300 an weiteren Weichbonbons 300, unterzogen werden.

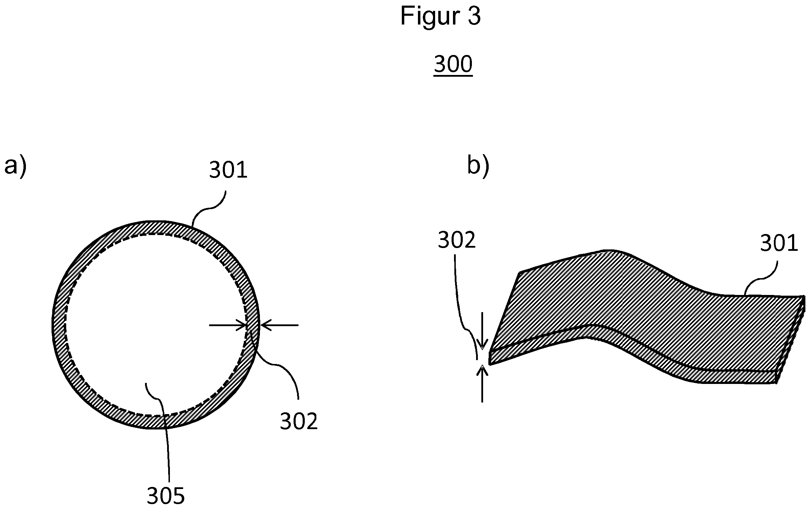

Figur 3a) zeigt einen schematischen Querschnitt eines Weichbonbons 300. Das Weichbonbon 300 ist ein Fruchtgummibonbon, welches aus einer Wandung 301 besteht. Die Wandung 301 hat eine Wanddicke 302 von 2 mm. Die Wandung umgibt einen Innenraum 305 vollständig. Das Weichbonbon 300 ist als Hohlkugel ausgebildet.

Figur 3b) zeigt eine schematische Darstellung eines weiteren Weichbonbons 300. Dieses Weichbonbon 300 ist eine Weingummi, welches aus einer Wandung 301 besteht. Die Wandung 301 hat eine Wanddicke 302 von 3 mm. Das Weichbonbon 300 ist als gewellte Schicht ausgebildet.

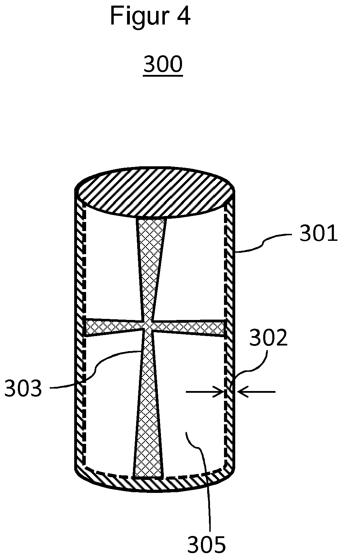

Figur 4 zeigt einen schematischen Querschnitt eines weiteren Weichbonbons 300. Das Weichbonbon 300 ist ein Fruchtgummibonbon, welches aus einer Wandung 301 besteht. Die Wandung 301 hat eine Wanddicke 302 von 1 mm. Die Wandung umgibt einen Innenraum 305 vollständig. Das Weichbonbon 300 ist als an seinen Stirnseiten geschlossener Hohlzylinder mit einer Stützstruktur 303 in dem Innenraum 305 ausgebildet.

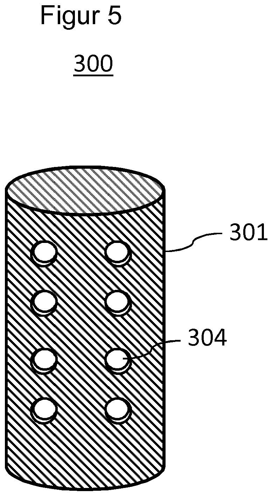

Figur 5 zeigt eine schematische Darstellung eines weiteren Weichbonbons 300. Das Weichbonbon 300 ist ein Fruchtgummibonbon, welches aus einer Wandung 301 besteht. Die Wandung 301 hat eine Wanddicke 302 von 2 mm. Die Wandung umgibt einen Innenraum 305 vollständig. Das Weichbonbon 300 ist als Hohlzylinder mit 8 Öffnungen 304 in der Wandung 301 ausgebildet.

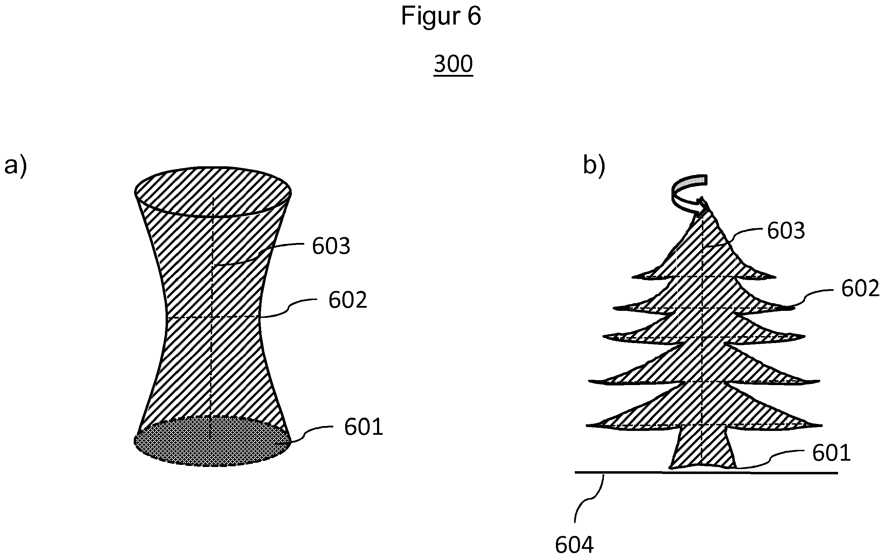

Figur 6a) zeigt eine schematische Darstellung eines weiteren Weichbonbons 300. Das Weichbonbon 300 ist ein Schaumgummibonbon, gekennzeichnet durch einen Durchmesser 602 in einer Ebene parallel zu einer Grundfläche 601. Eine Abhängigkeit einer Länge des Durchmessers 602 von einer Position auf einer Geraden 603 senkrecht zu der Grundfläche 601 ist beschreibbar durch eine Durchmesserfunktion, wobei die Durchmesserfunktion zwei globale Maxima aufweist.

Figur 6b) zeigt eine schematische Darstellung eines weiteren Weichbonbons 300. Das Weichbonbon ist ein veganes Fruchtgummibonbon, welches dreidimensional eine Form eines Tannenbaums nachbildet. Durch den Pfeil in Figur 6b) ist eine Rotationssymmetrie des Weichbonbons 300 angedeutet. Das Weichbonbon 300 ist gekennzeichnet durch einen Durchmesser 602 in einer Ebene parallel zu einer Grundfläche 601. Eine Abhängigkeit einer Länge des Durchmessers 602 von einer Position auf einer Geraden 603 senkrecht zu der Grundfläche 601 ist beschreibbar durch eine Durchmesserfunktion, wobei die Durchmesserfunktion mindestens 5 lokale Maxima aufweist. Die Grundfläche 601 ist ausgebildet zum Ablegen oder Abstellen des Weichbonbons 300 auf einer ebenen Unterlage 604 durch Kontaktieren der Grundfläche 601 mit der ebenen Unterlage 604. Bedingt durch ein Trocknen des Weichbonbons 300 weicht die Grundfläche 601 von einer ebenen Ausgestaltung ab. Durch Abstellen des Weichbonbons 300 mit der Grundfläche 601 auf der ebenen Unterlage 604 kann das Weichbonbon 300 in einer stabilen Lage abgestellt werden.

Figur 7a) zeigt einen schematischen Querschnitt eines weiteren Weichbonbons 300. Das Weichbonbon 300 ist ein Fruchtgummibonbon beinhaltend ein Loch 701, wobei das Loch 701 eine Tiefe 702 von 10 mm hat. Das Loch 701 ist eine Vertiefung. Das Weichbonbon 300 ist trogförmig ausgebildet.

Figur 7b) zeigt eine schematische Darstellung eines weiteren Weichbonbons 300. Das Weichbonbon 300 ist ein Fruchtgummibonbon beinhaltend ein Loch 701, wobei das Loch 701 eine Tiefe 702 von 20 mm hat. Das Loch 701 ist eine Tunnel, welcher das Weichbonbon vollständig durchdringt. Das Weichbonbon 300 ist als offener Hohlzylinder ausgebildet.

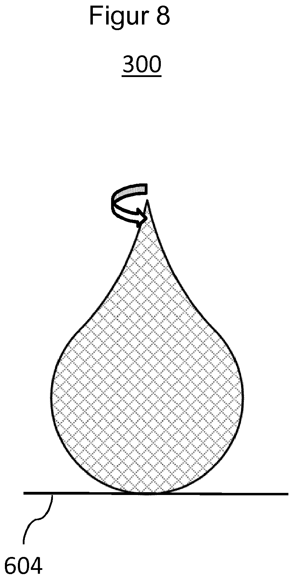

Figur 8 zeigt eine schematische Darstellung eines weiteren Weichbonbons 300. Das Weichbonbon 300 ist ein Weingummibonbon, welches keine Grundfläche 601 beinhaltet. Insbesondere beinhaltet das Weichbonbon 300 keine ebene Fläche. Ferner kann das Weichbonbon 300 nicht durch Ablegen oder Abstellen des Weichbonbons 300 auf einer ebenen Unterlage 604 in eine stabile Lage gebracht werden. Durch den Pfeil in Figur 8 ist eine Rotationssymmetrie des Weichbonbons 300 angedeutet.

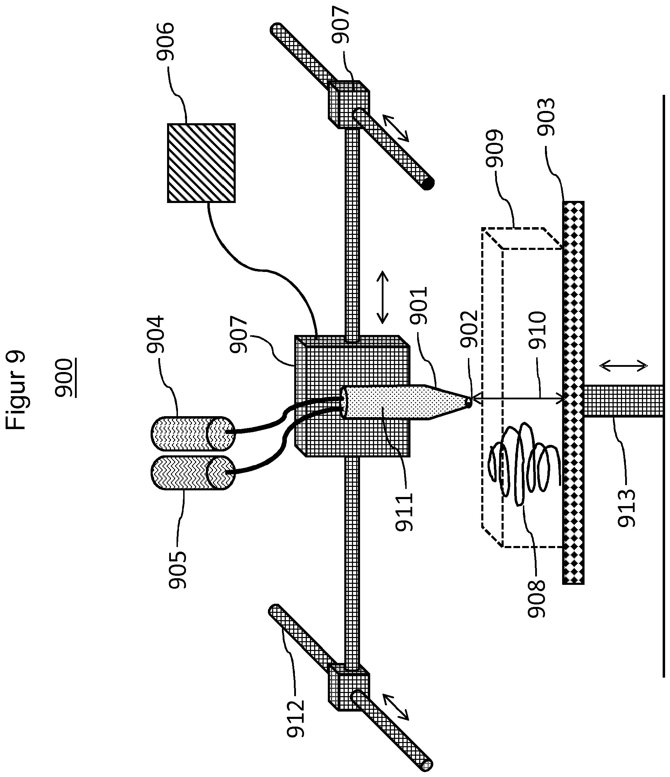

Figur 9 zeigt eine schematische Darstellung einer erfindungsgemäßen Vorrichtung 900 zum Herstellen eines Weichbonbons 300. Die Vorrichtung 900 beinhaltet eine Düse 901, beinhaltend eine Austrittsöffnung 902 und eine Weichbonbonvorläufermasse. Die Weichbonbonvorläufermasse ist die Vorläufermasse 2B3 gemäß den oben beschriebenen Beispielen. Die Weichbonbonvorläufermasse ist gekennzeichnet durch eine Temperatur von 60°C. Die Austrittsöffnung 902 der Düse 901 ist gekennzeichnet durch eine Austrittsfläche von 1 mm². Ferner beinhaltet die Düse 901 eine Mischkammer 911 zum Mischen einer Basismasse mit der Zitronensäure. Durch Mischen der Basismasse mit der Zitronensäure in der Mischkammer 911 kann die Weichbonbonvorläufermasse erhalten werden. Die Mischkammer 911 der Düse 901 ist fluidleitend über jeweils einen Schlauch verbunden mit einem ersten Behälter 904 und einem weiteren Behälter 905. Der erste Behälter 904 beinhaltet die Basismasse 2B. Der weitere Behälter beinhaltet die Zitronensäurelösung gemäß den obigen Beispielen zum Mischen mit der Basismasse. Die Düse 901 ist über einem Substrat 903 angeordnet. Die Düse 901 kann mittels eines Schienensystems 912, sowie einer vertikalen Translation des Substrats 903 durch eine Hubeinrichtung 913 (jeweils angedeutet durch Pfeile) und Motoren 907 so geführt werden, dass die Austrittsöffnung 902 an jeden Punkt eines dreidimensionalen Arbeitsvolumens 909 über dem Substrat 903 bewegt werden kann. Somit können mit der Vorrichtung 900 Weichbonbons 300 in einer Vielzahl von Formen, welche jeweils in das Arbeitsvolumen hineinpassen, erzeugt werden. Das Führen der Düse 901 mittels des Schienensystems 912 sowie ein Abgeben der Weichbonbonvorläufermasse aus der Austrittsöffnung erfolgen hierbei computergesteuert durch einen Computer 906. Der Computer 906 fungiert demnach als Ansteuerungseinheit. Ferner beinhaltet der Computer 906 eine Festplatte, auf welcher CAD-Modelle der Vielzahl von Formen der Weichbonbons 300 gespeichert sind. Das computergesteuerte Bewegen der Austrittsöffnung 902 erfolgt entlang einer dreidimensionalen Trajektorie 908, welche in dem Arbeitsvolumen 909 liegt. Bei dem Bewegen entlang der dreidimensionalen Trajektorie 908 wird ein Abstand 910 zwischen dem Substrat 903 und der Austrittsöffnung monoton mehr. Somit eignet sich die Vorrichtung 900 zum Durchführen des Verfahrens 100 nach Figur 1. Nach dem Fertigstellen des Weichbonbons 300 wird dieses von einem bevorzugt als Fließband ausgestalteten Fördermittel, das das Substrat 903 beinhaltet, abtransportiert, um Raum für die Herstellung eines weiteren Weichbonbons zu schaffen.

### Liste der Bezugszeichen

- 100: erfindungsgemäßes Verfahren
- 101: Verfahrensschritt a)
- 102: Verfahrensschritt b)
- 103: Härten
- 300: Weichbonbon
- 301: Wandung
- 302: Wanddicke
- 303: Stützstruktur
- 304: Öffnung
- 305: Innenraum
- 601: Grundfläche
- 602: Durchmesser
- 603: Gerade senkrecht zur Grundfläche
- 604: ebene Unterlage
- 701: Loch
- 702: Tiefe
- 900: erfindungsgemäße Vorrichtung
- 901: Düse
- 902: Austrittsöffnung
- 903: Substrat
- 904: erster Behälter
- 905: weiterer Behälter
- 906: Computer
- 907: Motor
- 908: dreidimensionale Trajektorie
- 909: dreidimensionales Arbeitsvolumen
- 910: Abstand zwischen der Austrittsöffnung und dem Substrat
- 911: Mischkammer
- 912: Schienensystem
- 913: Hubeinrichtung

## Patentansprüche

1. Ein Verfahren (100) zum Herstellen eines Weichbonbons (300), wobei das Verfahren (100) als Verfahrensschritte (101, 102) beinhaltet
a) Bereitstellen einer Weichbonbonvorläufermasse, **gekennzeichnet durch** einen Wassergehalt in einem Bereich von 17 bis 22 Gew.-%, bezogen auf die Weichbonbonvorläufermasse; und
b) Formen der Weichbonbonvorläufermasse mittels einer eine Austrittsöffnung (902) aufweisenden Düse (901) durch Überlagern eines Substrats (903) mit der Weichbonbonvorläufermasse unter Erhalten eines Formkörpers,
wobei die Austrittsöffnung (902) der Düse eine dreidimensionale Trajektorie (908) abfährt.

2. Das Verfahren (100) nach Anspruch 1, wobei das Bereitstellen der Weichbonbonvorläufermasse in Verfahrensschritt a) die Unterschritte:
i) Bereitstellen einer Basismasse; und
ii) Kontaktieren der Basismasse mit einer Säure unter Erhalten der Weichbonbonvorläufermasse
beinhaltet.

3. Das Verfahren (100) nach Anspruch 1, wobei das Bereitstellen der Weichbonbonvorläufermasse in Verfahrensschritt a) die Unterschritte:
A) Bereitstellen einer Grundmasse;
B) Bereitstellen einer Säuremasse; und
C) Kontaktieren der Grundmasse mit einer Säuremasse unter Erhalten der Weichbonbonvorläufermasse
beinhaltet,
wobei die Grundmasse und die Säuremasse in einem Gewichtsverhältnis von 1:2 bis 2:1 kontaktiert werden.

4. Das Verfahren (100) nach Anspruch 3, wobei die Grundmasse einen Polyzucker beinhaltet, wobei der Gehalt an Polyzucker der Grundmasse mindestens 10 Gew.-% über dem Gehalt an Polyzucker in der Säuremasse liegt.

5. Das Verfahren (100) nach einem der Ansprüche 3 oder 4, wobei die Säuremasse eine Säure beinhaltet, wobei der Gehalt an Säure der Säuremasse mindestens 10 Gew.-% über dem Gehalt an Säure der Grundmasse liegt.

6. Das Verfahren (100) nach Anspruch 3 oder 4, wobei die Grundmasse eine Grundmassenviskosität und die Säuremasse eine Säuremassenviskosität hat, wobei Grundmasseviskosität in einem Bereich von 50 bis 150 % der Säuremassenviskosität liegt.

7. Das Verfahren (100) nach einem der vorhergehenden Ansprüche, wobei in Verfahrensschritt a) die Weichbonbonvorläufermasse einen Polyzucker in einem Bereich von 1,2 bis 2,5 Gew.-% bezogen auf das Gewicht der Weichbonbonvorläufermasse beinhaltet.

8. Das Verfahren (100) nach einem der vorhergehenden Ansprüche, wobei in Verfahrensschritt a) die Weichbonbonvorläufermasse ein Polypeptid in einem Bereich von 1 bis 10 Gew.-% bezogen auf das Gewicht der Weichbonbonvorläufermasse beinhaltet.

9. Das Verfahren (100) nach einem der vorhergehenden Ansprüche, wobei die Weichbonbonvorläufermasse **gekennzeichnet ist durch** einen pH-Wert in einem Bereich von 3,0 bis 4,5.

10. Eine Vorrichtung (900) zum Herstellen eines Weichbonbons (300), wobei die Vorrichtung (900) eine Düse (901), beinhaltend eine Austrittsöffnung (902) und eine Weichbonbonvorläufermasse, beinhaltet;
wobei die Weichbonbonvorläufermasse **gekennzeichnet ist durch** einen Wassergehalt in einem Bereich von 17 bis 22 Gew.-%, bezogen auf die Weichbonbonvorläufermasse;
wobei die Düse (901)
a. über einem Substrat (903) angeordnet ist, und
b. so ausgebildet und angeordnet ist, dass die Austrittsöffnung (902) an jeden Punkt eines dreidimensionalen Arbeitsvolumens (909) über dem Substrat (903) bewegt werden kann.

11. Ein Verfahren zum Herstellen eines Weichbonbons (300) mit der Vorrichtung (900) nach Anspruch 10.

12. Eine Verwendung einer Weichbonbonvorläufermasse, **gekennzeichnet durch** einen Wassergehalt in einem Bereich von 17 bis 22 Gew.-%, bezogen auf die Weichbonbonvorläufermasse, zu einem Herstellen eines Weichbonbons (300) mittels Formen der Weichbonbonvorläufermasse durch eine Düse (901).

13. Eine Verwendung der Vorrichtung (900) nach Anspruch 10 zu einem Herstellen eines Weichbonbons (300).

## Claims

1. Process (100) for producing a soft candy (300), the process (100) comprising as process steps (101, 102)
a) providing a soft-candy precursor composition **characterized by** a water content in a range from 17 to 22% by weight, based on the soft-candy precursor composition; and
b) shaping the soft-candy precursor composition by means of a nozzle (901) having an outlet opening (902) by overlaying a substrate (903) with the soft-candy precursor composition to obtain a shaped article,
the outlet opening (902) of the nozzle traveling a three-dimensional trajectory (908).

2. Process (100) according to Claim 1, wherein the provision of the soft-candy precursor composition in process step a) comprises the substeps:
i) providing a base composition; and
ii) contacting the base composition with an acid to obtain the soft-candy precursor composition.

3. Process (100) according to Claim 1, wherein the provision of the soft-candy precursor composition in process step a) comprises the substeps:
A) providing a foundation composition;
B) providing an acid composition; and
C) contacting the foundation composition with an acid composition to obtain the soft-candy precursor composition;
the foundation composition and the acid composition being contacted in a weight ratio from 1:2 to 2:1.

4. Process (100) according to Claim 3, wherein the foundation composition comprises a polysaccharide, the polysaccharide content of the foundation composition being at least 10% by weight above the polysaccharide content in the acid composition.

5. Process (100) according to either of Claims 3 and 4, wherein the acid composition comprises an acid, the acid content of the acid composition being at least 10% by weight above the acid content of the foundation composition.

6. Process (100) according to Claim 3 or 4, wherein the foundation composition has a foundation composition viscosity and the acid composition has an acid composition viscosity, foundation composition viscosity being in a range from 50 to 150% of the acid composition viscosity.

7. Process (100) according to any of the preceding claims, wherein, in process step a), the soft-candy precursor composition comprises a polysaccharide in a range from 1.2 to 2.5% by weight, based on the weight of the soft-candy precursor composition.

8. Process (100) according to any of the preceding claims, wherein, in process step a), the soft-candy precursor composition comprises a polypeptide in a range from 1 to 10% by weight, based on the weight of the soft-candy precursor composition.

9. Process (100) according to any of the preceding claims, wherein the soft-candy precursor composition is **characterized by** a pH in a range from 3.0 to 4.5.

10. Device (900) for producing a soft candy (300), the device (900) comprising a nozzle (901) which comprises an outlet opening (902) and a soft-candy precursor composition;
the soft-candy precursor composition being **characterized by** a water content in a range from 17 to 22% by weight, based on the soft-candy precursor composition;
the nozzle (901)
a. being arranged above a substrate (903), and
b. being designed and arranged such that the outlet opening (902) can be moved to any point of a three-dimensional working volume (909) above the substrate (903).

11. Process for producing a soft candy (300) using the device (900) according to Claim 10.

12. Use of a soft-candy precursor composition, **characterized by** a water content in a range from 17 to 22% by weight, based on the soft-candy precursor composition, for a production of a soft candy (300) by means of shaping of the soft-candy precursor composition by means of a nozzle (901).

13. Use of the device (900) according to Claim 10 for a production of a soft candy (300).

## Revendications

1. Procédé (100) de production d'un bonbon mou (300),
le procédé (100) comportant des étapes de procédé (101, 102) consistant à :
a) fournir une masse de précurseur de bonbons mous,
**caractérisé par**
une teneur en eau de l'ordre de 17 à 22 % pondéraux rapportés à la masse de précurseur de bonbons mous, et
b) mettre en forme la masse de précurseur de bonbons mous avec une buse (901) comportant un orifice de sortie (902) appliquant la masse de précurseur de bonbons mous sur un substrat (903) pour obtenir un corps de forme,
l'orifice de sortie (902) de la buse parcourant une trajectoire en trois dimensions (908).

2. Procédé (100) selon la revendication 1,
selon lequel
la fourniture de la masse de précurseur de bonbons mous de l'étape de procédé a) comprend les étapes intermédiaires suivantes :
i) fournir une masse de base ; et
ii) mettre en contact la masse de base avec un acide pour obtenir la masse de précurseur de bonbons mous.

3. Procédé (100) selon la revendication 1,
selon lequel
fournir la masse de précurseur de bonbons mous dans l'étape de procédé a) comprend les étapes intermédiaires consistant à :
A) fournir une masse de base ;
B) fournir une masse acide ; et
C) mettre en contact la masse de base avec la masse acide pour obtenir la masse de précurseur de bonbons mous,
la masse de base et la masse acide étant mises en contact selon un rapport pondéral de 1:2-2:1.

4. Procédé (100) selon la revendication 3,
selon lequel
la masse de base contient un polysaccharide, la teneur en polysaccharide de la masse de base dépassant d'au moins 10% pondéraux de la teneur en polysaccharide de la masse acide.

5. Procédé (100) selon l'une des revendications 3 ou 4,
selon lequel
la masse acide contient un acide, la teneur en acide de la masse acide dépassant d'au moins 10% pondéraux la teneur en acide de la masse de base.

6. Procédé (100) selon la revendication 3 ou 4,
selon lequel
la masse de base a une viscosité de masse de base et la masse acide a une viscosité de masse acide, la viscosité de masse de base étant dans une plage comprise entre 50 à 150% de la viscosité de la masse acide.

7. Procédé (100) selon l'une des revendications précédentes,
selon lequel
dans l'étape a), la masse de précurseur de bonbons mous contient un polysaccharide dans une plage de 1,2 jusqu'à 2,5% pondéraux rapportés au poids de la masse de précurseur de bonbons mous.

8. Procédé (100) selon l'une des revendications précédentes,
selon lequel
dans l'étape de procédé a) la masse de précurseur de bonbons mous contient un polypeptide de l'ordre de 1 à 10% pondéraux par rapport au poids de la masse de précurseur de bonbons mous.

9. Procédé (100) selon l'une des revendications précédentes,
selon lequel
la masse de précurseur de bonbons est **caractérisée par** un pH de l'ordre de 3,0 à 4,5.

10. Dispositif (900) pour produire un bonbon mou (300), le dispositif (900) comportant une buse (901) avec un orifice de sortie (902) et contenant une masse de précurseur de bonbons mous ;
la masse de précurseur de bonbons mous étant définie par :
une teneur en eau de l'ordre de 17% à 22% pondéraux rapportés à la masse de précurseur de bonbons mous ;
la buse (901) étant :
a. installée au-dessus d'un support (903), et
b. réalisée et installée pour que l'orifice de sortie (902) se déplace en tout point d'un volume de travail tridimensionnel (909) au-dessus du support (903).

11. Procédé de production d'un bonbon mou (300) avec le dispositif (900) selon la revendication 10.

12. Application d'une masse de précurseur de bonbons mous,
**caractérisée par**
une teneur en eau de l'ordre de 17 à 22% pondéraux rapportés à la masse de précurseur de bonbons mous pour une production d'un bonbon mou (300) par la mise en forme de la masse de précurseur de bonbons mous avec une buse (901).

13. Application du dispositif (900) selon la revendication 10,
pour produire un bonbon mou (300).
